(19) Europäisches Patentamt
European Patent Office
Office européen des brevets

(11) **EP 4 322 462 A1**

(12) **EUROPEAN PATENT APPLICATION**

(43) Date of publication:
**14.02.2024 Bulletin 2024/07**

(21) Application number: **22190185.3**

(22) Date of filing: **12.08.2022**

(51) International Patent Classification (IPC):
$H04L\ 9/08^{(2006.01)}$    $H04L\ 9/32^{(2006.01)}$
$H04L\ 9/40^{(2022.01)}$    $H04W\ 12/00^{(2021.01)}$
$G16Y\ 30/10^{(2020.01)}$    $H04L\ 9/14^{(2006.01)}$
$H04W\ 12/041^{(2021.01)}$

(52) Cooperative Patent Classification (CPC):
**H04L 9/0844; G16Y 30/10; H04L 9/0861;
H04L 9/0863; H04L 9/0866; H04L 9/0869;
H04L 9/14; H04L 9/3273; H04L 63/06;
H04L 63/0823; H04L 63/0869; H04L 63/0876;
H04L 63/12; H04W 12/009**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AG Eindhoven (NL)**

(72) Inventor: **Garcia Morchon, Oscar
Eindhoven (NL)**

(74) Representative: **Philips Intellectual Property &
Standards
High Tech Campus 52
5656 AG Eindhoven (NL)**

(54) **IMPROVED SECURITY ESTABLISHMENT METHODS AND SYSTEMS WHEREIN KEYS ARE DERIVED FROM A PROTOCOL TRANSCRIPT**

(57)    The invention relates to methods and devices for setting up a secure communication channel with an improved key exchange for a security establishment protocol or procedure.

Fig. 12

EP 4 322 462 A1

**Description**

FIELD OF THE INVENTION

The invention relates to security establishment procedures between devices and/or applications in a wired or wireless data network, such as - but not limited to - password authenticated key exchange (PAKE).

BACKGROUND OF THE INVENTION

A password or a passphrase is a string of characters that is usually chosen by a user. Passwords are often used to authenticate a user to allow access to a resource. Since most user-chosen passwords have low entropy and weak randomness properties, these passwords may not be used directly as cryptographic keys.
Key derivation functions (KDFs) are deterministic algorithms that are used to derive one or more secret keys (cryptographic keying material) from a secret value, such as a main key, a password, or a passphrase using a pseudorandom function (PRF) which typically uses a cryptographic hash function or block cipher. A password based KDF (PBKDF) may be defined by the choice of the PRF and a fixed iteration count C. An input to an execution of a PBKDF may include a password $P$, a salt $S$, and an indication of the desired length $kLen$ of a desired master key $mk$ in bits, denoted as $kLen$. Symbolically, this can be expressed as follows:

$$mk = PBKDF_{(PRF,\ C)}\ (P,\ S,\ kLen).$$

The salt may be a binary value that is used as an input to the PBKDF to allow generation of a large set of keys for a given password. The iteration count (C) is a fixed value that determines how many times the PRF iterates to generate one block of the master key. The iteration count may be selected as large as possible, as long as the time required to generate the key using the entered password is acceptable for users.
Modern PBKDFs, such as PBKDF2 (specified in IETF specification RFC 2898), can be based on a recognized cryptographic hash, such as SHA-2, use more salt (at least 64 bits and chosen randomly) and a high iteration count.

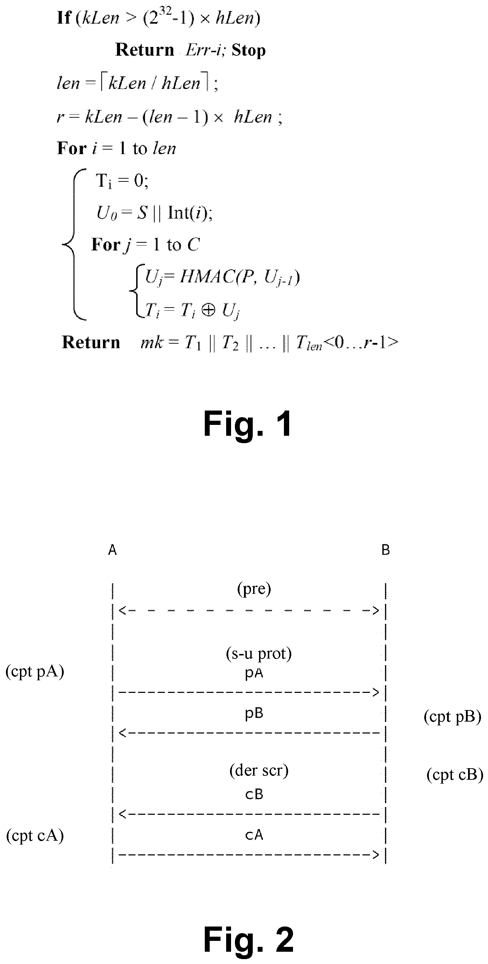

Fig. 1 shows an example of a PBKDF2 algorithm for the derivation of master keys from passwords, which uses a keyed-hash message authentication code or hash-based message authentication code (HMAC) with Secured Hash Algorithm 1 (SHA-1) as PRF. The digest size of the hash function in bits is denoted as $hLen$. HMAC is a specific type of MAC involving a cryptographic hash function and a secret cryptographic key. As with any MAC, it may be used to simultaneously verify both the data integrity and authenticity of a message.
The input of the algorithm of Fig. 1 comprises a password $P,$ a salt $S,$ an iteration count $C,$ and a desired length $kLen$ of a master key in bits (at most (232-1) x $hLen$). Parameters of the algorithm are the PRF (which is a HMAC with an approved hash function) and a digest size $hlen$ of the hash function. Output of the algorithm is the master key $mk.$
First, it is checked whether the desired length of the master key is largen than the maximum length. If so, then an error indicator ($Err$-$i$) is returned and the procedure stops.
If the desired length is within the acceptable range, a loop parameter $len$ for an outer loop ($i = 1\ to\ len$) for code portions $T_i$ to be combined is determined based on the ratio $kLen/hLen$ and each code portion is calculated in an inner loop ($j = 1\ to\ C$).
Fig. 2 shows a signaling diagram of a message exchange between two devices A and B that includes a specific augmented PAKE process (called "SPAKE2+") as described in Taubert, T. et al.: "SPAKE2+, an Augmented PAKE (Draft)", IETF, 5 May 2022. A similar message exchange applies to a specific balanced PAKE process denoted SPAKE2 as described in W. Ladd et al.: "SPAKE2, a PAKE (Draft)", IETF, June 2, 2021.
SPAKE2+ defines a PAKE that allows two parties (a party may be a device, an application etc.) A and B to agree on a common symmetric key in an authenticated manner, where the authentication is based on a (weak) password. After an initial preamble exchange (pre) to communicate identities, protocol version, PBKDF parameters, etc., the procedure executes the PAKE involving four messages and two round trips. The first party A computes a shared secret pA (cpt pA) and the second party B computes a shared secret pB (cpt pB). The first two messages (including the respective shared secrets pA and pB) are used for setting up a protocol (s-u prot) and to agree on a common secret. Then, the second party B computes a confirmation cB (cpt cB) and the first party computes a confirmation cA (cpt cA). The last two messages (including the respective confirmations cB and cA) are used for deriving secrets (der scr) and for key confirmation. Two of the messages may be combined into one (pB + cB), as they are successively transmitted into the same direction (from B to A).
However, in the context of SPAKE2+ or other security establishment procedures, it is desirable to improve security establishment procedures to thereby further enhance security.

## SUMMARY OF THE INVENTION

It is an object of the present invention to provide enhanced security for communication between devices and/or applications.

This object is achieved by an apparatus as claimed in claims 1 and 2, by a communication device as claimed in claim 12, by a method as claimed in claims 13 and 14, by a computer program product as claimed in claim 15, and a system as claimed in claim 16.

According to a first aspect (e.g., related to a first end of a transmission link), an apparatus is provided for controlling a security establishment process between a first communication device and a second communication device over a transmission link, wherein the apparatus is adapted to:

> receive from the second communication device, a second preamble message;
> derive from information within the second preamble message, a protocol transcript;
> derive from the protocol transcript, a first key used to protect subsequent traffic; and
> generate using the first key, a third key and a fourth key used to respectively ensure integrity and confidentiality of messages transmitted from the first communication device to the second communication device.

According to a second aspect (e.g., related to a second end of a transmission link), an apparatus is provided for controlling a security establishment process between a first communication device and a second communication device over a transmission link, wherein the apparatus is adapted to:

> receive from the first communication device, a first preamble message;
> derive from information within the first preamble message, a protocol transcript;
> derive from the protocol transcript, a first key used to protect subsequent traffic; and
> generate using the first key, a sixth key and a seventh key used to respectively ensure integrity and confidentiality of messages transmitted from the first communication device to the second communication device.

According to a third aspect, a communication device comprising the apparatus of the first aspect and/or the second aspect is provided.

According to a fourth aspect, a method of controlling a security establishment process between a first communication device and a second communication device over a transmission link is provided, wherein the method comprises:

> receiving from the second communication device, a second preamble message;
> deriving from information within the second preamble message, a protocol transcript;
> deriving from the protocol transcript, a first key used to protect subsequent traffic; and
> generating using the first key, a third key and a fourth key used to respectively ensure integrity and confidentiality of messages transmitted from the first communication device to the second communication device.

According to a fifth aspect, a method of controlling a security establishment process between a first communication device and a second communication device over a transmission link is provided, wherein the method comprises:

> receiving from the first communication device, a first preamble message;
> deriving from information within the first preamble message, a protocol transcript;
> deriving from the protocol transcript, a first key used to protect subsequent traffic; and
> generating using the first key, a sixth key and a seventh key used to respectively ensure integrity and confidentiality of messages transmitted from the first communication device to the second communication device.

According to a sixth aspect, a computer program product is provided, which comprises code means for producing the steps of the above methods according to the fourth or fifth aspect when run on a computer device.

According to a seventh aspect, a system comprising two or more communication devices of the third aspect is provided.

Accordingly, a key derivation procedure, based on exchanged preamble information from which a protocol transcript is derived, can be implemented. However, the protocol transcript does not depend directly on the information exchanged in the preamble, so that the initial preamble exchange and the subsequent security establishment messages are not well linked. Thus, the single first key used for the protection of subsequent traffic can be derived from the protocol transcript and be then used to generate integrity and confidentiality keys for respectively ensuring integrity and confidentiality of messages transmitted from the first communication device to the second communication device and vice versa. In the context of 3GPP standards: such integrity keys can be advantageously used to generate a message authentication code, e.g., by using a 5G New Radio Integrity Algorithm, NIA, and such confidentiality keys can be advantageously used to encrypt the messages, e.g., by using a 5G New Radio Encryption Algorithm, NEA.

According to a first option which may be combined with any of the above first to seventh aspects, the apparatus may be further adapted to:

derive from the first key, a second key used to protect a communication from the first communication device to the second communication device, the third key and the fourth key being derived from the second key by means of a key derivation function, KDF. Thereby, a second key used to protect a one-way communication from the first communication device to the second communication device can be generated and the third and fourth keys can be derived from the first key indirectly, i.e., via the thus generated second key.

According to a second option which may be combined with the first option or any of the above first to seventh aspects, the apparatus may be further adapted to derive from the first key, a fifth key used to protect a communication from the second communication device to the first communication device, the sixth key and the seventh key being derived from the fifth key by means of a key derivation function, KDF. Thereby, a fifth key used to protect a one-way communication from the second communication device to the first communication device can be generated and the sixth and seventh keys can be derived from the first key indirectly, i.e., via the thus generated fifth key.

According to a third option which may be combined with the second option or any of the above first to seventh aspects, the third key and the fourth key may be derived from the first key by means of a key derivation function, KDF, execution or call. Thereby, the third and fourth keys can be directly derived from the first key.

According to a fourth option which may be combined with the first option or any of the above first to seventh aspects, the sixth key and the seventh key may be derived from the first key by means of a key derivation function, KDF, execution or call. Thereby, the sixth and seventh keys can be directly derived from the first key.

According to a fifth option which may be combined with any of the first to fourth options or any of the above first to seventh aspects, the information within the first preamble message may comprise at least a session identifier and/or a first random value. Thereby, the session identifier and/or the first random value can be used to derive the protocol transcript.

According to a sixth option which may be combined with any of the first to fifth options or any of the above first to seventh aspects, the information within the second preamble message may comprise at least a session identifier and/or a second random value. Thereby, the session identifier and/or the second random value can be used to derive the protocol transcript.

According to a seventh option which may be combined with any of the first to sixth options or any of the above first to seventh aspects, the first key may be a shared symmetric secret. Thus, the shared symmetric secret can be derived from the protocol transcript, from which the first key is derived.

According to an eighth option which may be combined with any of the first to seventh options or any of the above first to seventh aspects, the first communication device may comprise a commissioning tool configured to use the security establishment process to interact with the second communication device in order to perform at least one selected from the group of commissioning, configuring, authenticating and authorizing, or to perform a security setup process. Thereby, the proposed security enhancement can be applied for security establishment in connection with various commissioning, configuring, authenticating, authorizing or security setup processes.

According to a ninth option which may be combined with any of the first to eighth options or any of the above first to seventh aspects, the second communication device may be comprised in a medical device or a personal healthcare device or a smart home device. Thus, the proposed security enhancement can be applied for various medical, healthcare and smart home applications.

It is noted that the above apparatuses may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatuses of claims 1 and 2, the communication device of claim 12, the methods of claims 13 and 14, the computer program product of claim 15, and the system of claim 16 may have similar and/or identical preferred embodiments, in particular, as defined in the dependent claims.

It shall be understood that a preferred embodiment of the invention can also be any combination of the dependent claims or above embodiments with the respective independent claim. These and other aspects of the invention will be apparent from and elucidated with reference to the embodiments described hereinafter.

BRIEF DESCRIPTION OF THE DRAWINGS

In the following drawings:

Fig. 1 shows an algorithm for calculating a master key using a PBKDF;

Fig. 2 shows a signaling diagram that includes a message exchange according to a security establishment protocol, e.g., SPAKE2+ or SPAKE2 process;

Fig. 3 schematically shows a signaling and processing diagram for an improved security establishment protocol according to various embodiments;

Fig. 4 schematically shows a block diagram of a communication device according to various embodiments;

Fig. 5 schematically shows a block diagram of a PBKDF configurator element or function according to an embodiment;

Fig. 6 schematically shows a block diagram of an implicit PBKDF parameter generator element or function according to an embodiment;

Fig. 7 shows a flow diagram of a conditional PBKDF parameter exchange according to an embodiment;

Fig. 8 shows a signaling diagram of a preamble exchange with PAKE support information according to an embodiment;

Fig. 9 shows a signaling diagram of a preamble exchange with hash function information according to an embodiment;

Fig. 10 shows a signaling diagram of a preamble exchange with reliability information according to an embodiment;

Fig. 11 schematically shows a block diagram of a lower layer protocol support for fragmentation handling according to an embodiment;

Fig. 12 shows a flow diagram of a key derivation procedure based on exchanged preamble information according to an embodiment;

Fig. 13 schematically shows an exemplary protocol stack according to an embodiment;

Fig. 14 schematically shows a signaling and processing diagram for an improved security establishment process, e.g., based on SPAKE2(+), with reduced number of roundtrips according to an embodiment.

Fig. 15 schematically shows a signaling and processing diagram for UE-to-UE relay scenarios according to an embodiment;

Fig. 16 schematically shows a signaling and processing diagram for personal IoT network scenarios according to an embodiment;

Fig. 17 schematically shows a signaling and processing diagram for UE-to-UE relay scenarios according to an embodiment;

Fig. 17b schematically shows a signaling and processing diagram for UE-to-UE relay scenarios according to an embodiment;

Fig. 18 schematically shows a signaling and processing diagram for UE-to-UE relay scenarios according to an embodiment; and

Fig. 19 schematically shows elements and interfaces in a personal IoT network scenario.

DETAILED DESCRIPTION OF THE EMBODIMENTS

Embodiments of the present invention are now described based on various modifications of security establishment procedures or protocols (SEP) relying on, e.g., a generic PAKE or SPAKE2 or SPAKE2+, where the protocol allows establishing a security property, such as for example at least one of authorization, mutual authentication based on a shared password, key establishment based on a public key exchange, and key confirmation.

The inventor has realized that real-world implementations and certain use-cases may give rise to a need to better secure such key exchanges. Wireless networks are vulnerable to such things as man-in the middle attacks. Thus, the inventor has realized that that key exchange messages can be better secured by providing at least one of a binding to a specific set of communication parties and/or to a specific key exchange procedure. Likewise it has been determined that they may be benefit from an improved derivation of one or more key derivation parameters based on one or more exchanged parameters, and/or a support for a potential key exchange upgrade to enhance security (e.g., due to increased processing power achieved by e.g. a quantum computer). Since communications are vulnerable to interception and are time-sensitive since a user may be involved, they may benefit from a reduction of the number of round trips of the key exchange process. Also means of providing authentication and authorization, or a reliable transfer (e.g., retransmissions) if messages of a PAKE protocol are transported over a non-reliable channel (e.g., a channel via a relay device (e.g., UE-to-UE relay - a use-case that the inventor has determined as exhibiting particular vulnerability) or between personal IoT networks (PIN) may be of benefit.

In the following, multiple modifications or enhancements when using an SEP are described based on embodiments where a first device or application uses PAKE to configure a second device or application. The following embodiments relate to enhancements in connection with provision of details on the preamble, details on how the exchange parameters in the preamble can be used in the PBKDF, details on negotiation of a PAKE in the preamble, alternative options for the interaction (e.g., selection of the device that starts PAKE communication) after preamble messages exhibit different features, and reduction of the number of round trips.

The proposed enhanced SEP procedure may be applied in connection with wired or wireless transmission channels or communication streams over communication networks and possibly other networks. In the 3GPP specifications 23.303, 23.304, 24.334 and 24.554 for 4G and 5G networks, respectively, so-called proximity service (ProSe) functions are defined to enable - amongst others - connectivity for cellular communication devices (e.g., UEs) that are temporarily not in coverage of an access device (e.g., eNB). This particular function is called ProSe UE-to-network relay, or Relay UE. The Relay UE is a communication device that helps another out-of-coverage (OoC) UE to communicate to the eNB (i.e., access device) by relaying application and network data traffic in two directions between the OoC UE and the eNB. The local communication between the Relay UE and the OoC-UE is called D2D communication or Sidelink communication or PC5 communication. The abbreviation "PC5" designates an interface for sidelink communication as defined by ProSe. Furthermore, the abbreviation "UL" is used for the uplink direction from the communication device (e.g., UE) to the access device (e.g., eNB, gNB), the abbreviation "DL" for the downlink direction from the access device (e.g., eNB, gNB) to the communication device (e.g., UE), and the abbreviation "SL" for sidelink communication between two or more communication devices (e.g. UEs).

Furthermore, 3GPP specifications TR 23.733 v15.1.0 and TR 36.746 v15.1.1 provide studies on architectural enhancements e.g. to enable an Internet of Things (IoT) device (in a role of Remote UE) to operate on very low power by using a Relay UE to connect to the wider network. Because the Relay UE is physically very close, it can be reached using very low power transmissions. This also includes security, speed and stability improvements to ProSe. These extensions of ProSe are called enhanced ProSe ("eProSe").

ProSe can also be used for direct communication between two UEs. Additional radio level details on ProSe, V2X and sidelink communication can be found in 3GPP specifications TR 37.985, TS 38.300 and TR 38.836.

There are IoT networks where devices communicate with each other and with other networks via a gateway. These networks may be termed personal IoT networks (PINs) and the devices in such a network may be termed 'PIN elements'. Such networks may communicate with the other network via a PIN element with gateway capability (PEGC). The PIN elements of a PIN may be managed by at least one PIN element with management capability (PEMC). An example of the other network may be a 5G network and document TR 23.700-18 describes enhancements of 5G systems to support PINs in accordance with the service requirements as documented in TS 22.261.

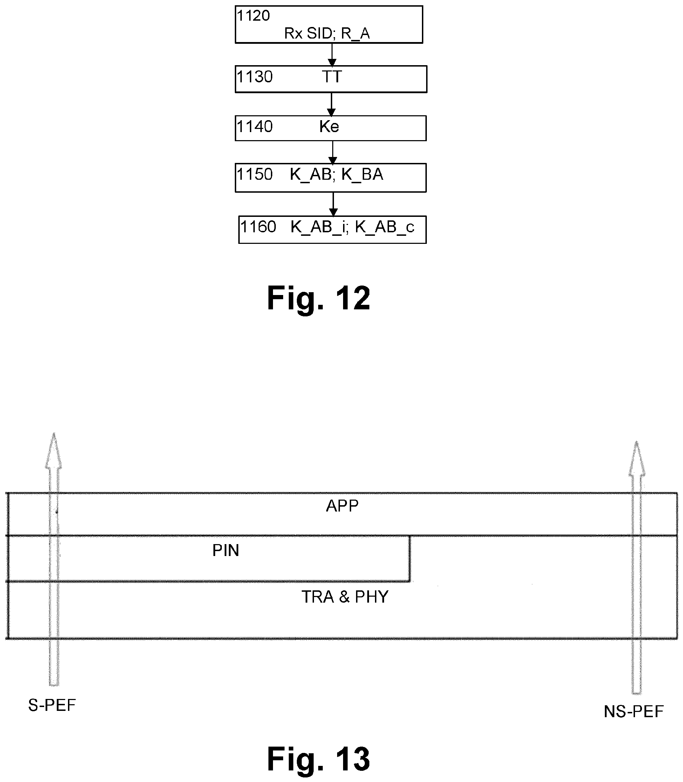

According to TR 23.700-88 (for example), a PIN element may be a UE or non-3GPP device that can communicate within a PIN (via a PIN direct connection, via a PEGC, or via a PEGC and a 5G capability (5GC)), or outside the PIN via a PEGC and a 5GC. According to TR 23.700-88, a PIN element with gateway capability is a PIN element with an ability to provide connectivity to and from a 5G network for other PIN elements, or to act as relay for a communication between PIN elements. A PIN element with management capability is a PIN element with capability to manage the PIN. According to TR 23.700-88, a PIN direct connection refers to the connection between two PIN elements without PEGC, any 3GPP RAN or core network entity in the middle. Multiple key issues are included in TR 23.700-88 including 5GC architecture enhancements to support PIN, PIN and PIN element discovery and selection, management of PIN and PIN elements, communication of PIN, authorization of PIN, policy and parameters provisioning for PIN, or identification of PIN and PIN elements. TR 23.700-88 also includes multiple feasible solutions that illustrate such a protocol layer structure as shown in Fig. 13. It should be understood that the layer structure of Fig. 13 is not limited to 5G networks and many other networks may employ a similar layer structure.

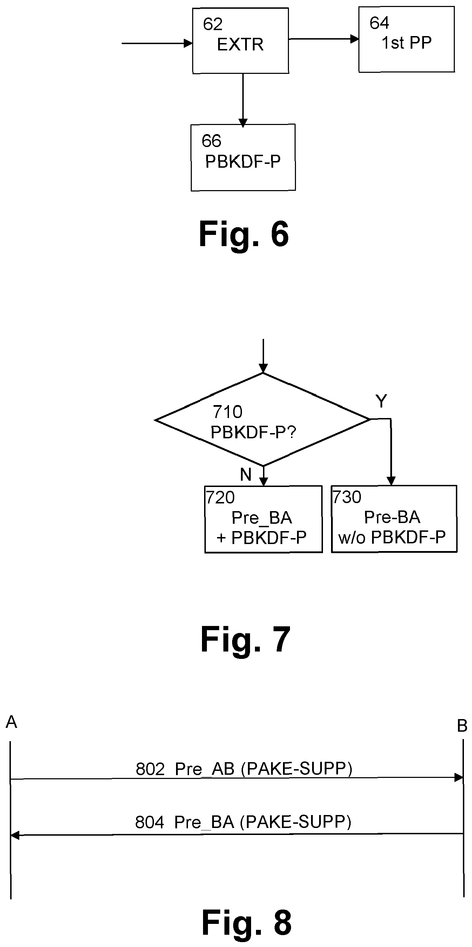

Fig. 13 schematically shows an exemplary protocol stack according to an embodiment that may be applied to e.g. a system as described in TR 23.700-88 with reference to its Figure 6.0B.2-2.

As shown in Fig. 13, a PIN layer (responsible for processing PIN IDs, PIN elements, PEGCs and/or PEMCs) may be configured to run over multiple transport (TRA) and/or physical (PHY) layers (including WIFI, Bluetooth, 5G ProSe, etc.) and support a a higher application (APP) layer (which may be configured to control light bulbs, power sockets, washing machines or any other controllable devices) in handling key exchange and/or other security establishment functions as described in the following embodiments.

In an example, a supported PIN element function (S-PEF) may represent functionalities providing communication within the PIN layer (e.g., via a PIN direct connection or via a PEGC), or outside the PIN (e.g., via a PEGC). The PEF is also able to communicate with a PEMC for been configured, for discovery and for authentication and authorisation.

A non-supported PEF (NS-PEF) may represent functionalities that communicate directly between the transport (TRA) and/or physical (PHY) layers and the higher application layer without using the intermediate PIN layer.

Furthermore, there may be key issues such as protection of an identification of the PIN and PIN privacy, a secure communication between PINEs, secure policy and parameter provisioning, authorization of a PIN element (PINE), PIN and PINE discovery authorization, controlling access of PIN elements to the other (e.g., 5G) network, authentication and authorization to a PINE, secure authentication of PINE, or secure provisioning of credentials in non-3GPP device via PEGC.

There may be situations involving a relay device such as a UE-to-UE relay, i.e., a first device A talking to a second device B over a third device acting as relay. In such a use case, there may be issues including privacy protection, integrity protection, confidentiality protection or authorization over the UE-to-UE relay. The function of a relay may also be seen in a mesh network.

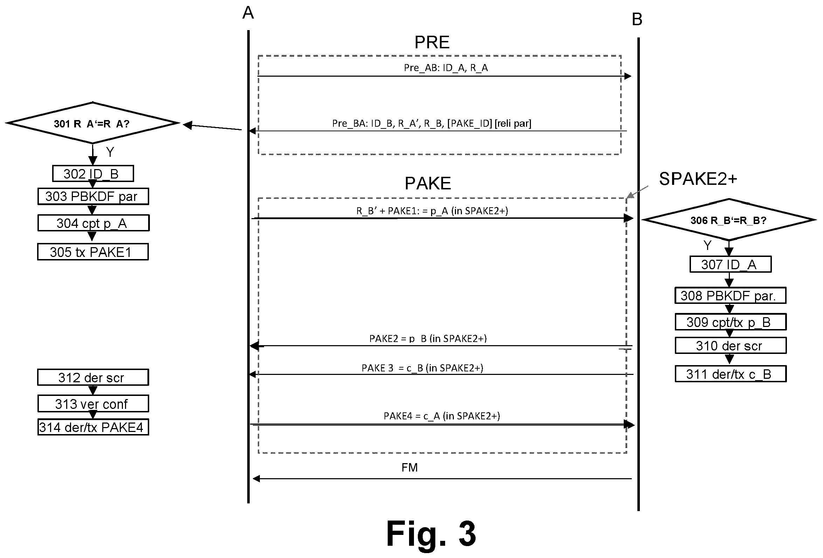

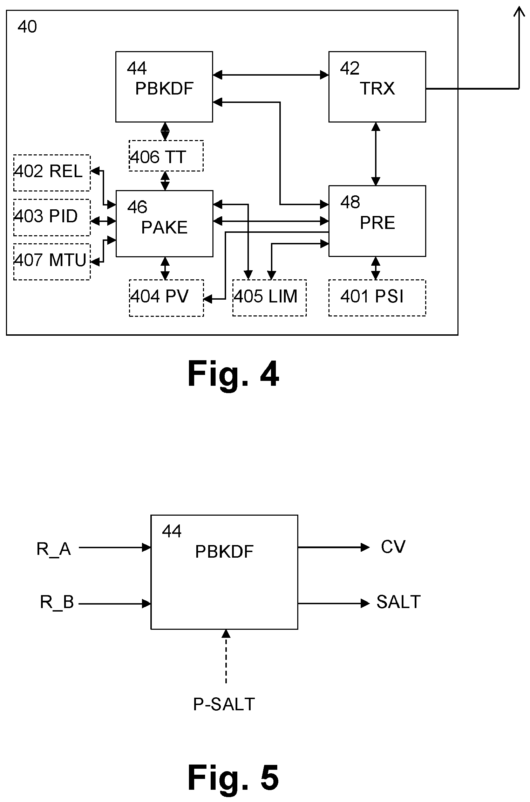

In the following, various embodiments with improvements of SEPs are described. Further details of their involved hardware components are described later with reference to Fig. 4, while details of their procedural and signaling steps are described with reference to Figs. 3 and 5 to 13.

Some embodiments are summarized in Fig. 3 where a first device or device A wishes to setup a secure communication channel with a second device or device B.

Fig. 3 schematically shows a signaling and processing diagram for an improved SPAKE-based SEP according to various embodiments. In this diagram, exchange of information and its direction between the two devices A and B is indicated by a corresponding arrow and processing steps are indicated by respective blocks, while the time proceeds from the top to the bottom of Fig. 3. Not all the steps may always be required or applied and some steps may be executed multiple times for increased accuracy or continuous processes.

The first device A may be a mobile application used to configure a second device B, e.g., a medical device or a personal healthcare device or a smart home device. The first device may also be a PEMC or a PEGC. Device A and device B may communicate over WiFi, or other communication means such as Bluetooth Low Energy (BLE), thread, or over a 3GPP standard, e.g., using Sidelink, or over a low power communication protocol.

It may be the case that a device (or a combination of devices) is used to configure other devices, particularly for connection to a given network. The device (or devices) may be dedicated for this purpose or it (they) may be more general-purpose device(s) with a function running on it (them). An example of a function running on a device may be an application (or 'app') running on a smartphone. An example of a multiple device providing the function may be one device relaying the messages used for the configuring to another device such as a server. The term 'commissioning tool' may be used to refer to the function provided by the device (or combination of devices) performing the task of configuring or it may be used to refer to the device(s) themselves.

The two devices A and B may need to run a PAKE such as an augmented or balanced PAKE (e.g., SPAKE2+ or SPAKE2, respectively) to mutually authenticate to each other and establish a secret. However, there may be potentially many pairs of devices A and B doing the same at the same time. This may occur, e.g., when a commissioning tool (such as device A, when providing a function for this purpose) for the IoT network needs to commission many devices B, or when a device B may be configured by multiple commissioning tools.

Thus, it is important to associate the PAKE exchange to a given communication link between two specific devices. Each device A or B may associate such PAKE exchange to a given communication (link) identified by a given a communication session identifier. The session identifiers of devices A and B for the same PAKE exchange do not need to be equal. This may be important when the PAKE process is executed at the application protocol layer because in this case the PAKE is not aware of underlying networking identifiers such as Media Access Control (MAC) addresses or IP addresses of the lower protocol layer.

When devices A and B exchange some initial messages (e.g., preambles as described in Fig. 2), devices A and B may need to ensure that they have a single PAKE session alive, or if they have multiple, that they are linked to the correct peers.

In an example, device A may be a commissioning tool that may interact with many potential devices to be commissioned and/or configured and/or authenticated and/or authorized and/or security configured, for instance, smart home devices.

In an example, device B may be a smart home device that may have to deal with multiple commissioning devices A (e.g., an app running on a mobile phone) at the same time when multiple users or multiple apps are trying to connect to it.

According to various embodiments, two preamble messages Pre_AB (transmitted from device A to device B) and Pre_BA (transmitted from device A to device B) are proposed to be exchanged during the preamble phase (PRE).

In message Pre_AB, device A can send to device B its short (e.g., 8 bits) PAKE identifier ID_A. As an addition option, device A may also include in the message Pre_AB a (long) random value R_A.

In message Pre_BA, device B can send to device A its short (e.g., 8 bits) PAKE identifier ID_B. As an addition option, device B may also include a (long) random value R_B and a previously received R_A'. As further option, described in later embodiments, device B may further include in its message Pre_BA at least one of an identifier (PAKE_ID) of the PAKE protocol version and a reliability parameter (reli par).

Upon reception of the Pre_BA message, device A checks in step 301 whether R_A' is equal to R_A, and if it is, then the device A sets the peer session identifier to be used in subsequent messages as ID_B (step 302). If R_A' and R_A do not match, device A may abort the process, e.g., with an error message or a report (e.g., to identify man-in-the-middle attacks or other attacks) or drop the executed protocol or restart the protocol.

Then, the PAKE phase starts (which may be a SPAKE2+ process), where during a first round, device A sends, in a first message PAKE1, its public share p_A to device B which in turn responds with its own public share secret p_B in a second message PAKE2. For the purposes of the present, a public share, e.g., p_A or p_B, is a value transmitted by a transmitting entity that allows the receiving party to derive a shared secret with the transmitting entity by combining the received public share with a private value only known to the receiving party, e.g., as defined in SPAKE2+. In a second round, both parties may use a unique and secret protocol transcript (TT) to derive a shared symmetric secret (shared key) from the protocol transcript. The key confirmations c_A and c_B are derived from the shared symmetric secret and exchanged in third and fourth messages PAKE3, PAKE4, as initially described in connection with Fig. 2.

More specifically, in step 303 of Fig. 3, device A determines or applies PBKDF parameters based on, e.g., information provided in respective fields exchanged with the preamble messages or as provided/configured by a central managing entity. Then, it computes in step S304 the common secret p_A and transmits it in step 305 in the first message PAKE1 together with the latest received R_B'.

Upon reception of R_B', device B can check in step 306 whether R_B' is equal to R_B, and if it is, then device B sets in step 307 the peer session identifier to be used in subsequent messages as ID_A. If R_B' and R_B are not equal, device B may abort the process, e.g., with an error message or a report (e.g., to identify man-in-the-middle attacks or other attacks), or drop the executed protocol or restart the protocol.

In step 308, device B may determine or apply the PBKDF parameters based on, e.g., information provided in respective fields exchanged with the preamble messages or as provided/configured by a central managing entity. Then, it computes and sends the common secret p_B in the second message PAKE2 to device A in step 309. Additionally, device B derives the shared secret in step 310 based on the received common secret p_A. Then, it derives and sends the key confirmation c_B in step 311 in the third message PAKE3 to device A.

In step 312, device A derives the shared secret based on the common secret p_B received with the second message PAKE2. Then, it verifies the key confirmation c_B received in the third message PAKE3 in step 313 and derives the key confirmation c_A and sends it in step 314 to device B in the fourth message PAKE4.

The key confirmations c_A and c_B in the last round-trip may be authentication keys derived from the shared symmetric secret. In an example, both devices A and B may be configured to compute an authentication tag with an authentication key produced over the protocol transcript.

Finally, the final message (FM) is transmitted from device B to the initiating device A to close the procedure.

In some scenarios addressed e.g. in TR 33.740, the exchange of the preamble messages or some of its fields may be done in an initial discovery phase between UEs through a UE relay or between UE and a UE relay, e.g., a discovery phase associated to UE-to-UE relay scenarios. In such scenarios, the PAKE exchange may be done during the establishment of a secure PC5 interface taking place after the discovery phase. In some scenarios addressed in TR 33.882, the exchange of the preamble messages may be done between in a discovery phase of a PINE.

Thus, by providing the preamble messages Pre_AB and Pre_BA with PAKE identifiers ID_A and ID_B and random values R_A and R_B, respectively, PAKE sessions can be discriminated to ensured that devices A and B have a single PAKE session alive, or if they have multiple, that they are linked to the correct peers.

In above use case of Fig. 3, a commissioning tool (device A) may need to interact with many devices at the same time. However, device B may be allowed to interact with a single commissioning tool at a time. Thus, device B may have a single PAKE exchange process alive at any point of time.

Therefore, in an alternative embodiment, the steps of Fig. 3 involving R_B are removed since device B can expect that a single device A is active at any point of time, e.g., when device A is a commissioning tool such as an app running on a mobile phone and device B is a smart home device. In such a situation, the exchange may not require the exchange of R_B at all.

Similarly, in an alternative embodiment, instead of requiring the exchange of two preamble messages Pre_AB and Pre_BA, a single preamble message, e.g., Pre_AB or Pre BA may be involved. For instance, upon reception of Pre_AB, device B would reply with the first PAKE message. In such an alternative embodiment, Pre_AB may only include certain configuration parameters or preferences. In a specific application of this alternative embodiment related to 3GPP proximity services, e.g., for use cases and requirements as in TR 33.740, the content in the Pre_AB message may be included in a model A discovery message, i.e., in an announcing message sent by an announcing UE. Upon reception of the Pre_AB message, i.e., of the announcing discovery message, by device B, i.e., by a monitoring device, device B would reply with a direct communication request (DCR) message initiating the PAKE and including the first PAKE message.

Fig. 4 schematically shows a block diagram of a communication device 40 according to various embodiments, which may correspond to at least one of the above devices A and B (including applications).

The communication device 40 comprises a transceiver (TRX) 42 (e.g., a radio frequency (RF) front end or any other communication unit) for transmitting and receiving messages over a communication channel or link or the like of a wired or wireless network.

A preamble control unit or function (PRE) 48 is provided for generating and decoding preamble messages (e.g., Pre_AB, Pre_BA in Fig. 3) transmitted resp. received by the transceiver 42 during a preamble phase of a PAKE process.

Furthermore, the communication device 40 comprises a PAKE control unit or function 46 for generating and decoding PAKE messages (e.g., PAKE1 to PAKE4 in Fig. 3) transmitted resp. received by the transceiver 42 during a preamble phase of a PAKE process.

Additionally, the communication device 40 comprises a PBKDF control unit or function 44 for deriving keys to be used in the PAKE process.

It should be noted that at least some of the preamble control unit or function 48, the PAKE control unit or function 46 and the PBKDF control unit or function may be combined in a single control unit (e.g., a software-controlled processor or computer) and may be implemented by respective software routines controlling a processor or computer device.

It should be further noted that the dashed blocks of Fig. 4 represent optional components which will be described in more detail in subsequent embodiments.

The preamble control unit or function 48 may be configured to set and/or derive at least one of a peer session identifier (PSI) 401, a session limitation parameter (LIM) 405, a PAKE protocol version identifier (PV) 404, PBKDF configuration parameters, and PAKE configuration parameters for/from transmitted/received preamble messages.

As already mentioned above, a unique and secret protocol transcript (TT) 406 may be used to derive a shared symmetric secret (shared key). To achieve this, the PAKE control unit or function 46 and/or the PBKDF control unit or function 44 may have access to the protocol transcript 406.

Furthermore, reliability settings (REL) 402 may be stored in the communication device 40, which influence the communication behavior of the communication device 40, as described later.

Additionally, as already mentioned above, a PAKE ID (PID) 403 and/or a maximum transmission unit (MTU) 407 may be stored or set in the communication device 40, as described later.

In the above use case of Fig. 3, when device B is allowed to have a limited number of PAKE alive sessions at any point of time, device B may need to limit the number of incoming requests.

Thus, if device B sets the peer session identifier 401 to be used in subsequent messages as ID_A already upon the reception of preamble message Pre_AB (e.g., since R_B is not used) and before the first PAKE message (e.g., the first message of a SPAKE2+ process) is received, then device B may be configured to limit the number of preamble messages Pre_AB allowed per unit of time, and/or to limit the maximum number of allocated peer ID sessions, and/or to discard an allocated ID_A if the first PAKE message PAKE1 is not received before a predetermined timeout. This may be particularly advantageous where R_B is not used - or at least not checked.

The respective parameters (e.g., maximum number of preamble messages per unit of time, maximum number of allocated peer ID sessions, and/or predetermined timeout) may be stored as the session limitation parameter(s) 405 accessible by the preamble control unit of function 48 and/or the PAKE control unit or function 46.

The above limitation settings are advantageous in that an attacker may otherwise inject many potential preamble messages Pre_AB exhausting the available sessions.

Fig. 5 schematically shows a block diagram of a PBKDF configurator element or function according to an embodiment.

The PBKDF configurator element or function may be implemented by the PBKDF control unit or function of Fig. 4.

As initially described in connection with Fig. 1, the PBKDF may require several parameters such as a counter value or a salt value. These parameters may be configured, e.g., out-of-band (i.e., not included in the exchanged preamble and PAKE messages), by a default setting, by a manual user operation, or may be specified in a specification. However, in this case, these parameters are rather static. This may raise a problem in that the output of the PBKDF will always be the same after the execution of the initial preamble phase. However, in certain cases it may be preferred to bind a given preamble execution to a subsequent PAKE execution.

In an embodiment, to address this issue, information exchanged in the preamble phase may be used as input to the PBKDF (i.e., to the PBKDF control unit or function 46 in Fig. 4).

More specifically, the PBKDF control unit or function 46 of the communication device 40 (e.g., device A and/or B) may be configured to determine PBKDF parameters (as defined e.g. in Meltem Sönmez Turan et al.: "Recommendation for Password-Based Key Derivation, Part 1: Storage Applications", NIST Special Publication 800-132, December 2010), e.g., the count value or the salt value, as a function of exchanged parameters in the preamble messages (e.g., Pre_AB, Pre_BA). It is to be noted that the same embodiment may be applicable if/when a different routine (e.g., a hash function or an HMAC) for deriving a key based on a password (i.e., different than PBKDF) is used.

As indicated in Fig. 5, the exchanged random parameters R_A and R_B (or at least one of these) may be supplied as input values to the PBKDF control unit or function 44 and may be processed (e.g., logically or arithmetically combined) to obtain at least one of the PBKDF parameters count value (CV) and salt value (SALT).

In a first example, the salt parameter may be computed as the logical XOR combination of the exchanged R_A and R_B parameters.

In a second example, the salt parameter may be computed as the logical XOR combination of the exchanged R_A and R_B parameters and a preconfigured salt (P-SALT) set and stored in the communication device 40.

In a third example, the salt parameter may be computed as a hash function of one of the above salt parameter values.

In a fourth example, the salt parameter may be computed as a cryptographic function, e.g., a hash function, of a function, e.g., a concatenation, of the exchanged R_A and R_B parameter.

In a fifth example, the salt parameter may be a subset of bits (e.g., truncation) of any of the above salt parameter values.

In a sixth example, the count value may be set to a minimum value of e.g., 1000 (e.g., as defined in a standard), but dependent on the exchanged parameters, e.g., R_A and R_B parameters, e.g., as (R_A + R_B) (modulo K) where K is a system parameter that may indicate the maximum number of additional iterations.

In a seventh example, exchanged parameters (e.g., R_A, R_B) may also be used together with a pre-shared salt parameter associated to the connection to be established.

Alternatively, the exchanged parameters, e.g., R_A and R_B, may also be used together with (e.g., concatenated with) the shared password.

As a further alternative, the PAKE identifiers exchanged by device A and B in the preamble messages may also be used as input parameters in the above examples.

The above alternatives can be applied, e.g., when the PAKE is a balanced PAKE. They are also applicable, e.g., when the password in an augmented PAKE is stored in a secure element, e.g., a SIM card, that performs the PBKDF, and only returns a value or token from which the password cannot be easily retrieved, e.g., only through an offline dictionary attack. This value may be the verification value pair L and w0. The above alternatives are also applicable when a communication device requests a third communication device to compute and return such a value or token given the input exchanged parameters and a password that is not accessible or known to the communication device.

As a further alternative, the values R_A and R_B may also be combined at a later stage of the SEP to link the preamble to the key derived from the PAKE. For instance, once initiator and responder have established a shared secret K, a subsequent session key K' may be derived from K, R_A and/or R_B.

It should be understood that deriving the salt parameter from the values exchanged in the preamble (such as the R_A and/or R_B), as described above, may be combined with limiting the rate of preamble messages or number of peer sessions, as described previously.

As indicated above, the PBKDF parameters, e.g., salt and/or counter value, may be received in a pre-configuration phase or may be exchanged through a different channel, e.g, they may be read by device A from a QR code (or bar code or other scannable code) attached to device B or may be exchanged out-of-band, e.g., through near field communication (NFC), BLE, or other wireless communication channels. These parameters may also be received during a pre-configuration from a central entity, e.g., a network function in a 5G system.

However, the exchange of the PBKDF parameters may require additional space, e.g., in the QR code. For instance, a QR code may need to encode more information and thus, it may need to be larger taking extra space on a package or on a product such as a light bulb. Moreover, a wireless message may need to be longer requiring additional energy for its transmission.

A way to deal with this issue is that the PBKDF parameters are implicitly exchanged, i.e., the actual information for the PBKDF parameters may be read or exchanged for a different purpose, e.g., to identify a given network or device type, and this information may be reused as the PBKDF parameters (e.g., salt or counter value). This can also be beneficial since it may allow the initiator to skip the exchange of the preamble messages, i.e., the initiator may directly send the first PAKE message.

Fig. 6 schematically shows a block diagram of an implicit PBKDF parameter generator element or function according to an embodiment.

For instance, if a field is exchanged/read for a first purpose (1$^{st}$ PP) 64, then the same bits or a (predetermined) subset of the bits may be reused as salt parameter or counter value. To achieve this, an extractor function (EXTR) 62 (e.g., a register or addressable memory portion) may be used for copying the bits and supplying them to a PBKDF parameter memory or register (PDKDF-P) 66. Examples of the first purpose may include identification of the network or details concerning the devices such as their type. In particular, the first purpose may be anything other than the PBKDF operation.

The bits of the exchanged/read field(s) may also be expanded, e.g., by concatenating (a subset of) them to a predefined bitstring or by using them as input to a function, e.g, a hash function.

Implicitly signaled PBKDF parameters are advantageous in that QR codes can remain small and the PAKE process is linked to information contained in the QR code and used for other purposes.

The implicit exchange of the PBKDF parameters may limit the control over their values, and thus at least some PBKDF parameters, e.g., counter value, may be set to a non-suitable value. This can be prevented by adding a fixed value (e.g., number) as an offset to the implicitly derived value, so that the parameter value to be used (e.g., count value) may be calculated by the following function:

$$parameter\ value = fixed\ number + value\ obtained\ implicitly$$

or any other function that guarantees a certain property, e.g., a minimum value of the PBKDF parameters.

It is to be noted that a password may also be pre-configured, in particular, in embedded devices without an input device such as a keyboard. An example of such an embedded device is a light bulb. The password should not be exchanged unprotected over the air, but its reading may also be implicit. For instance, device B may have a QR code encoding certain parameters. Device A may then read the QR code and derive the shared password from all or at least a part of the read parameters. It is to be noted that the password may also be received during a pre-configuration from a central entity, e.g., a network function in a 5G system.

Fig. 7 shows a flow diagram of a conditional PBKDF parameter exchange according to an embodiment, which may be implemented by the PAKE control unit or function 46.

The preamble message Pre_AB may be configured to provide an indication whether device A knows already the required PBKDF parameters or not. Reason for this may be that in some use cases device A may have other access to the PBKDF parameters (e.g., via implicit signaling as described above).

However, in other scenarios it may not be feasible for device A to know the PBKDF parameters, e.g., when device A is a commissioning tool sending a request to many devices over WiFi or Ethernet or Bluetooth or the like. Similarly, in other scenarios device A may always know the PBKDF parameters.

Similarly, in some scenarios, device A may be a commissioning tool and device B may be an IoT device. Since IoT devices have very different communication and computational capabilities, a given IoT device B may only support a certain security level. Thus, device B may be configured or requested to indicate, e.g., in the preamble Pre_BA transmitted from device B to device A, its security strength that determines *kLen* (e.g., as configured by the manufacturer) and possibly the strength of a subsequent PAKE. Upon reception of Pre_BA, device A may derive suitable parameters to execute the PAKE using suitable security parameters.

An attacker may use this flexibility (e.g., introduced by a protocol giving an indication whether device A knows PBKDF parameters or not) to disrupt the communication in multiple ways. For instance, the attacker may desire to intercept the parameter information to better predict the potential output of the PBKDF. The attacker can trigger this exchange by placing itself between devices A and B and modifying a respective indication in the Pre_AB message requiring the exchange of the PBKDF parameters. In another example, an attacker may desire to modify the parameter information to easily force a failure in the subsequent PAKE phase. An attacker can do this by placing itself between devices A and B and modifying the exchanged information.

In the present embodiment, security and robustness of the protocol can be increased by providing a conditional transmission of, e.g., the PBKDF parameters.

In step 710, device B checks if it is aware about the knowledge of, e.g., its PBKDF parameters by device A.

Note that in some cases, a third device (e.g., a managing entity such as a network function in the 5G core network or an application running in the cloud) may perform such a check on behalf of device B. In such a case, device B may (need to) forward (or be requested to forward) the request to the third device, The third device would then perform the check protocol transcript and provide device B with the result of the check.

If device B (or a third device on behalf of device B) determines in step 710 that device A cannot know, e.g., its PBKDF parameters, the procedure branches to step 720 and device B sends, e.g., its PBKDF parameters, e.g. in preamble message Pre_BA, even if the content of message Pre_AB indicates that device A does have (access to) the PBKDF parameters (since message Pre_AB may have been maliciously modified).

Otherwise, if device B determines in step 710 that it is aware that device A knows, e.g., its PBKDF parameters, the procedure branches to step 730 and device B does not send, e.g., its PBKDF parameters, in message Pre_BA even if the content of message Pre_AB indicates that device A does not have (access to) the PKBDF parameters.

It should be understood that the PKBDF parameters of device B may have been determined by methods described previously such as deriving a salt from the preamble parameters (e.g., R_A and/or R_B) or by an OOB method. The conditional sending of the PKBDF paraments then may act as a further security enhancement, on top of the other measures.

In an example, device B may be configured to report or log an event where a preamble message with values different than expected gives an indication to device B of an ongoing attack.

Due to the advent of quantum computers, new cryptographic primitives (algorithms) for key encapsulation and digital signatures may be required. Once a quantum computer is available, many conventional cryptographic primitives will be broken, including, e.g., SPAKE2+.

Thus, an ecosystem, e.g., a smart home ecosystem, that starts deploying a system running a protocol based on PBKDF plus SPAKE2+ or another SEP may need a protocol upgrade to incorporate a quantum resistant PAKE. For instance, a different PAKE protocol (e.g., as described in Oleg Taraskin et al.: "Towards Isogeny-Based Password-Authenticated Key Establishment" or Xinwei Gao et al.: "Efficient Implementation of Password-Based Authenticated Key Exchange from RLWE and Post-Quantum TLS") may be executed in the PAKE phase after the initial preamble phase.

While a device, e.g., device A, may be capable of running multiple PAKE protocols, another device, e.g., device B, may only be capable of executing one PAKE protocol (either the legacy SPAKE2+ or a new PAKE protocol, e.g., a quantum-resistant PAKE protocol). In this example, legacy devices may only be able to run SPAKE2+ while new devices may run a new PAKE protocol.

Fig. 8 shows a signaling diagram of a preamble exchange with PAKE support information according to an embodiment.

In this embodiment, a modified preamble message Pre BA 802 may contain a new protocol support field (PAKE-SUPP) indicating the PAKE protocol(s) supported by device B. In an example, the protocol support field may contain a SPAKE2 ID. If device A receives and reads the corresponding field, then device A knows which PAKE protocol it needs to execute. If device A does not receive the new protocol support field, then device A knows that device B is a legacy device executing e.g. SPAKE2+.

Similarly, a modified message Pre_AB 804 may include the new protocol support field (PAKE-SUPP) indicating the PAKE protocol(s) supported by device A. If a new device B receives the protocol support field, then device B knows that device A supports multiple PAKE protocol(s) and may pick up a suitable one.

Similarly, a modified message Pre_AB 804 may include a request to receive the new protocol support field from device B.

It should be noted that other signaling parameters or information described in other embodiments may be combined with the information in the new protocol support field. Moreover, further information such as how the key derivation parameters (e.g., salt and count values) were/are to be obtained or that the other party used an OOB method.

Furthermore, in the future, certain parameters of the PBKDF and/or PAKE protocol may be customizable, e.g., the hash function used in the PBKDF. However, this requires that both device A and B know which algorithm to use.

To address this problem, information about preferred parameters of device A, e.g., the preferred hash function or the supported hash function, may be exchanged in message Pre_AB during the preamble phase

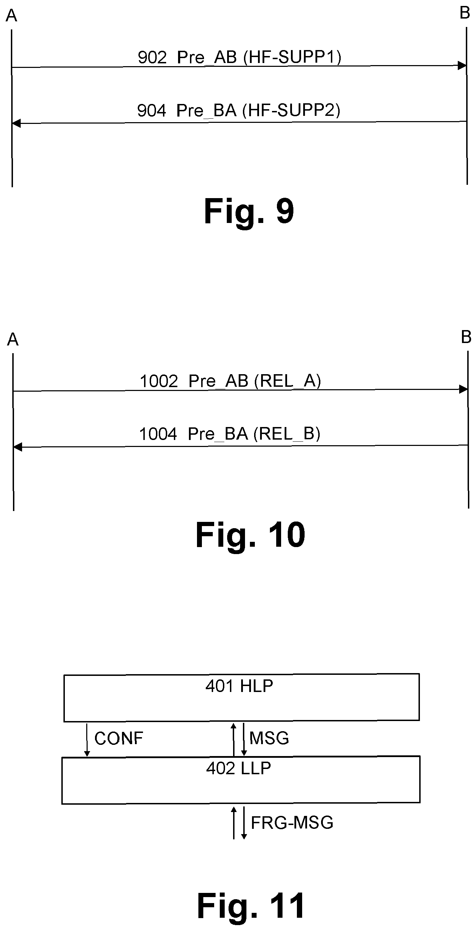

Fig. 9 shows a signaling diagram of a preamble exchange with hash function information according to an embodiment.

To address the above problem, device B may make a choice about the used hash function upon reception of a modified Pre_AB message 902 with a new hash function support field (HF-SUPP) and provide (signal) its choice in a modified Pre_BA message 904 with the new hash function support field (HF-SUPP).

Legacy devices unable to understand the new hash function support field of the embodiment may just ignore this field. If no corresponding answer is returned, then device A may be configured to use legacy parameters.

In some cases, message exchange in the preamble and/or PAKE phase may occur over an unreliable transport layer, i.e., messages may be dropped and, e.g., retransmissions may be required. This may require an enhancement of the protocol itself with capabilities for retransmission of messages or an exchange of certain reliability parameters, e.g., as part of the Pre_AB and/or Pre_BA messages, with a lower layer protocol (e.g., MAC protocol) that may provide such reliability capability.

The reliability capability may involve at least one of denoting a message as reliable so that upon reception of a message, the receiver needs to send an acknowledgement back; including a field that denotes a message to act as an acknowledgment for a given previous message (e.g., identified by means of a message identifier such as a counter); and including a maximum number of retransmissions required for a message (e.g., until an acknowledgment is received).

Fig. 10 shows a signaling diagram of a preamble exchange with reliability information according to an embodiment.

According to the embodiment, reliability settings REL_A and REL_B (e.g., reliability settings 402 in Fig. 4) are exchanged in the preamble phase, e.g., in modified Pre_AB message 1002 and a modified Pre_BA message 1004 with corresponding new fields and may apply to all subsequent messages in the protocol or to specific (e.g., marked or predetermined) messages that require reliability.

An underlying reliability protocol may allow for a limited number of pending acknowledgments and retransmissions, e.g., a single one. Device A and device B, e.g., when executing the preamble and PAKE protocol; may be configured to enforce that they do not accept or allow receiving a given message before a previous one has been properly accepted or received and an answer has been provided.

For instance, if device A sends a message M_A1, then device B replies with a message M_B1, then device A replies with a message M_A2, then device B replies with a message M_B2, then M_A3, then M_B3 and so on. Then, one of the devices, e.g., device A, may be configured not to accept message M_Bi before message M_A(i-1) has been acknowledged.

In a first example, upon reception of the reliability parameters REL_A and REL_B in the Pre_AB and Pre_BA messages, devices A and B may be configured to apply reliability parameters that ensure the highest reliability from the two sets of reliability parameters. For instance, if reliability parameter REL A requires up to two retransmissions and reliability parameter REL B requires up to three retransmissions, then both devices A and B are configured to retransmit up to three times.

In a second example, upon reception of the reliability parameters REL_A and REL_B in the Pre_AB and Pre_BA messages, devices A and B may be configured to apply reliability parameters that ensure the lowest reliability from the two sets of reliability parameters. For instance, if reliability parameter REL A requires up to two retransmissions and reliability parameter REL B requires up to three retransmissions, then both devices A and B are configured to retransmit up to two times.

In a third example, upon reception of the reliability parameters REL_A and REL_B, devices A and B may be configured to apply the reliability parameters required by the other party. For instance, if reliability parameter REL A requires up to two retransmissions and reliability parameter REL B requires up to three retransmissions, then devices B and A may retransmit up to two and three times, respectively.

The reliability parameters REL_A and REL B may be preconfigured as a set of configurations, e.g., four possible configurations (can be binarily encoded with two bits) that correspond to different parameters. In an example, the preamble field may only include an identifier identifying the chosen configuration.

In above example, the possible configurations may correspond to configurations with increasing reliability. Device A and B may then be configured to select e.g. a configuration with highest/lowest offered reliability based on a pre-deployed and/or configurable policy.

Certain networks may have an MTU of limited size. While SPAKE2+ has small message length, the usage of a future PAKE protocols may involve longer messages. Thus, it is a challenge to determine how to fragment messages and transmit them in a reliable manner.

Fig. 11 schematically shows a block diagram of a lower layer protocol setting for fragmentation handling according to an embodiment.

Thus, in an embodiment, the reliability parameters exchanged in an initial configuration phase (e.g., exchanged in the Pre_AB and Pre_BA messages pf the preamble phase of SPAKE2+) may include an MTU parameter (e.g., MTU parameter 407 of Fig. 4). The exchange MTU parameter(s) may refer to the MTU of the physical layer of device A, of device B, or of devices A and B. This MTU parameter(s) together with the PAKE version (e.g., PAKE version 404 in Fig. 4) provide an indication about fragmentation requirements, e.g., fragment size and/or number of fragments of subsequent messages.

In an embodiment, the devices A and B may not be aware of the allowed MTU (e.g., this may have been pre-configured). Therefore, the messages exchanged in an initial configuration phase (e.g., preamble phase in SPAKE2+, SPAKE2, a PAKE, or another SEP) may include a parameter such as the size of the subsequent messages in the protocol so that fragmentation requirements in the subsequent protocol messages can be derived/determined, e.g., whether certain messages in the subsequent protocol will require fragmentation and how many fragments.

These parameters may be used to set a lower layer protocol handling fragmentation.

As indicated in Fig. 11, a lower layer protocol (LLP) 402 may be configured to handle both fragmentation and reliability.

The configuration (CONF) of a lower layer fragmentation protocol may be implicit since the lower layer protocol 402 can monitor the length of a message (MSG) passed/forwarded by a higher layer protocol (HLP) 401 and determine based thereon the number of required fragments of fragmented messages (FRG-MSG) and based on this number the specific reliability parameters. This configuration can also be explicit, e.g., by passing/forwarding the maximum size of subsequent messages, e.g., PAKE messages, in an initial message, e.g., the preamble messages of the PAKE or another SEP.

The above parameters (e.g., MTU size and/or message size) may be used in the protocol shown in Fig. 3 to fragment certain messages, in particular, in an embodiment, messages PAKE1, PAKE2, PAKE3, and PAKE4 may be fragmented, where messages PAKE1 and PAKE2 may have the highest chances of requiring fragmentation.

In an example, fragments may include a fragment identifier.

In another example, the configuration message may provide an indication to the lower layer fragmentation protocol whether subsequent messages sent by, e.g., device A, may be fragmented and transmitted together. For instance, device A may require the transmission of messages 1 and 2 of length 1200 bytes each while the MTU is 1000 bytes. If fragments cannot be transmitted together, then a total of four fragmented messages need to be transmitted (e.g., 1000 bytes, 200 bytes, 1000 bytes, and 1000 bytes). If fragments can be combined, then only three fragmented messages need to be transmitted (e.g., 1000 bytes, 1000 bytes, and 400 bytes).

In an embodiment, a receiving party may be configured not to reply before all fragments of a certain message, e.g., PAKE 1, have been received and reassembled.

The underlying reliability/fragmentation protocol executed at a device (e.g., device A) may require requesting from another device (e.g., device B) the specific fragments (of a given PAKE message) that have not been received, e.g., received before a timer expires. Alternatively, a device may also confirm the fragments that have been received.

An entity in the device (e.g., the PAKE protocol (PAKE control unit or function 46 of Fig. 4) itself or an underlying reliability/fragmentation protocol on behalf of the higher layer protocol 401) may be configured not to send a subsequent (PAKE) message before all fragments of the previously expected (PAKE) message have been received.

The reliability parameters applied by a lower layer reliability/fragmentation protocol may depend on the fact whether a given message requires fragmentation or not. Furthermore, the reliability parameters may depend on the number of fragments.

In an example, if a message does not require fragmentation, then a retransmission may be required within a given timeout. If a message requires fragmentation of a message into multiple fragments, then a higher timeout value may be applied.

In another example, the lower layer reliability/fragmentation protocol may be configurable as to how many fragments of a message can be sent simultaneously.

In an embodiment, a party may request a specific fragment of a message if it has not been received before a timeout expires. For instance, if message PAKE1 needs to be fragmented into two fragments, then device B may be configured to request the second fragment from device A if it has not been delivered before a given timeout.

This fragmentation capability (and such a lower layer reliability and fragmentation protocol) may be applied not only to a PAKE protocol, but also to similar cryptographic protocols or involving large messages or to other applications requiring fragmentation (e.g., because of the usage of quantum-resistant primitives). This may involve e.g., digital signatures or key encapsulation mechanisms.

In an alternative embodiment, an SEP including a PAKE may be configured to handle fragmentation of certain messages, e.g., by a lower layer protocol offering fragmentation/reliability capabilities to upper layers, e.g., the SEP.

As explained in connection with Figs. 2 and 3, upon reception of PAKE1 and PAKE2 messages both the first device (e.g., device A) and the second device (e.g., device B) may be configured to derive secret keys that can be used for the protection of the subsequent communication.

In a specific example, SPAKE2+ or another SEP may define that a protocol transcript TT (e.g., protocol transcript 406 of Fig. 4 or as defined in Taubert, T. et al.: *"SPAKE2+, an Augmented PAKE (Draft)"*) may be generated by means of a KDF (e.g., at the PBKDF control unit or function 44 of Fig. 4) based on input parameters of SPAKE2+ (or the other SEP) and PBKDF.

The encoded bitstring TT of the protocol transcript is used to derive keys Ka and Ke. The key Ka is used for the generation of the confirmation messages (c_B, c_A) exchange in the PAKE3 and PAKE4 messages. The key Ke is used for the protection of subsequent traffic.

However, the protocol transcript does not depend directly on the information exchanged in the preamble, so that the initial preamble exchange and the subsequent PAKE messages are not well linked. Moreover, the Ke key is a single key used for the protection of the traffic, but certain protocols, e.g., 3GPP protocols, require two keys, one for integrity and one for encryption.

Fig. 12 shows a flow diagram of a key derivation procedure based on exchanged preamble information according to an embodiment.

In the embodiment, a KDF (e.g., PBKDF) is enabled to use input information exchanged in the preamble phase.

In step 1120 in the preamble phase, e.g., the session ID (SID) and/or the random values R_A and/or R_B are exchanged between devices A and B. This information is used in step 1130 to derive the protocol transcript (TT).

Then, in step 1140, the Ke key is derived from the protocol transcript.

In step 1150, the Ke key is used to derive by means of a KDF (e.g., PBKDF) two keys K_AB and K_BA to be used to protect the communication from the first device A to the second device B and vice versa.

Then, in step 1160, K_AB (or K_BA) is used to derive an integrity key and a confidentiality key K_AB_i and K_AB_c (or K_BA_i and K_BA_c) by means of a KDF (e.g., PBKDF) to ensure integrity and confidentiality of the messages sent from device A to device B (or from device B to device A).

In an embodiment, the integrity and confidentiality keys K_AB_i and K_AB_c and K_BA_i and K_BA_c may be directly derived from Ke by means of a single KDF execution or call. Such embodiments in which integrity and confidentiality keys are generated are, e.g., useful in the context of 3GPP standards where integrity keys are used to generate a message authentication code, e.g., by using a 5G New Radio Integrity Algorithm (NIA) and confidentiality keys are used to encrypt the messages, e.g., by using a 5G New Radio Encryption Algorithm (NEA)

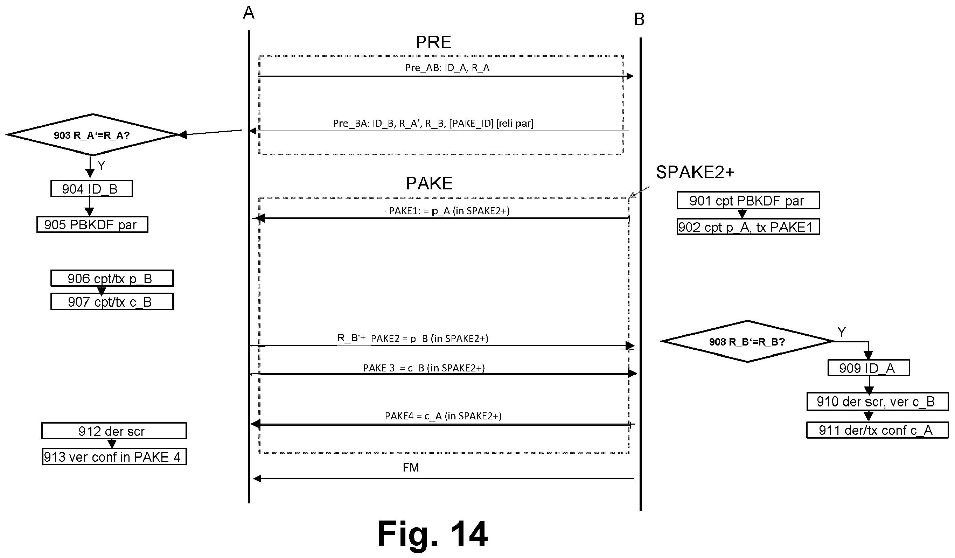

Fig. 14 schematically shows a signaling and processing diagram for an improved SPAKE process or other SEP with reduced number of roundtrips according to an embodiment.

The protocol design (preamble phase and PAKE phase) of Fig. 3 requires three round trips in total before the first device (e.g., device A) and the second device finish the exchange.

However, having a protocol involving multiple round trips leads to an increased latency of the protocol and a higher usage of, e.g., communication or energy resources. When a user is involved, e.g., a user using device A (e.g., a commissioning tool such as an app running on a phone) to configure device B, the user needs to wait for the protocol to be executed and a higher latency decreases user experience.

Thus, in the embodiment of Fig. 14, the messages of Fig. 3 are rearranged to require only two round trips in total, thereby decreasing protocol latency and thus increasing user experience. This is also useful in cases where the protocol is to be executed over a constrained network and/or with many devices simultaneously.

The way of achieving only two round trips, and thus, a more efficient protocol is to have the second device (e.g., device B) send the first PAKE1 message together with the Pre_BA message in step 902. This is feasible because upon reception of the Pre_AB message from the first device (e.g., device A), the second device may already execute in step 901 the PBKDF and generate the PAKE (e.g., SPAKE2+) parameters required for the first message PAKE1. Note that this may require rearranging some messages or operations in some PAKEs, e.g., in SPAKE2+ due to its unbalanced nature. For example, a second value could be sent in the first PAKE1 message and a first value could be sent in the second PAKE2 message. In the case of the process described in T. Taubert et. al: "SPAKE2+, an Augmented PAKE (draft-bar-cfrg-spake2plus-03)", 6 July 2021, section 9, the value Y would be sent in the first PAKE1 message and the value X would be sent in the second PAKE2 message where the values X and Y are defined as in the SPAKE2+ paper. Note that in some cases it may also require the second communication device to request a user or a third communication device the retrieval of the password or a password-based value, e.g. the verification value pair L and w0 in SPAKE2+ in case the second communication device has not been previously provided or configured with it.

It is to be noted that in such a protocol design device B may be subject to an increased risk of denial-of-service attacks by an attacker sending many initial Pre_AB messages, which may, e.g., exhaust the available PSIs. However, to avoid this problem, the present embodiment may be combined with the above limitation embodiment with the limitation settings based on the limitation parameters 405.

It is further to be noted that the first device (e.g., device A) only needs to process PAKE1 if the Pre_BA message succeeds or is acceptable, e.g., if the check (R_A'=R_A) in step 903 is affirmative and PBKDF is executed properly in step 905. This also holds if messages Pre_BA and PAKE1 are combined in a single message. If these verifications are confirmed, device A can proceed to process message PAKE1, compute its public share and transmit PAKE2 message in step 905, derive keys (e.g., as described in Fig. 12) for later communication and transmit PAKE3 in step 907. These messages PAKE2 and PAKE3 may optionally include R_B'.

Device B, upon reception of R_B', PAKE2 and PAKE3 may check R_B' for consistency in step 908, process PAKE2 and verify the correctness of PAKE3. If this holds, security keys (e.g., as described in Fig. 12) for the subsequent communication can be derived in step 910 and message PAKE4 can be computed and sent towards device A in step 911 as acknowledgement that the protocol was successful. If R_B and R_B' do not match, device B may abort the process, e.g., with an error message or a report (e.g., to identify man-in-the-middle attacks or other attacks), or drop the executed protocol or restart the protocol.

Finally, in step 912, device A derives the shared symmetric secret from the PAKE4 message and verifies the confirmation in step 913.

In contrast to the embodiment of Fig. 3 where the finish message (FM) is sent by the second device (e.g., device B) to the first device (e.g., device A) so that the first device is aware that the second device has (successfully) finished the exchange, the present embodiment of Fig. 14 does not require this finish message since the first device deduces the state of the second device from the reception of the fourth message PAKE4. If some fields in the finish message are required by device A, then those fields may be sent together with the PAKE4 message.

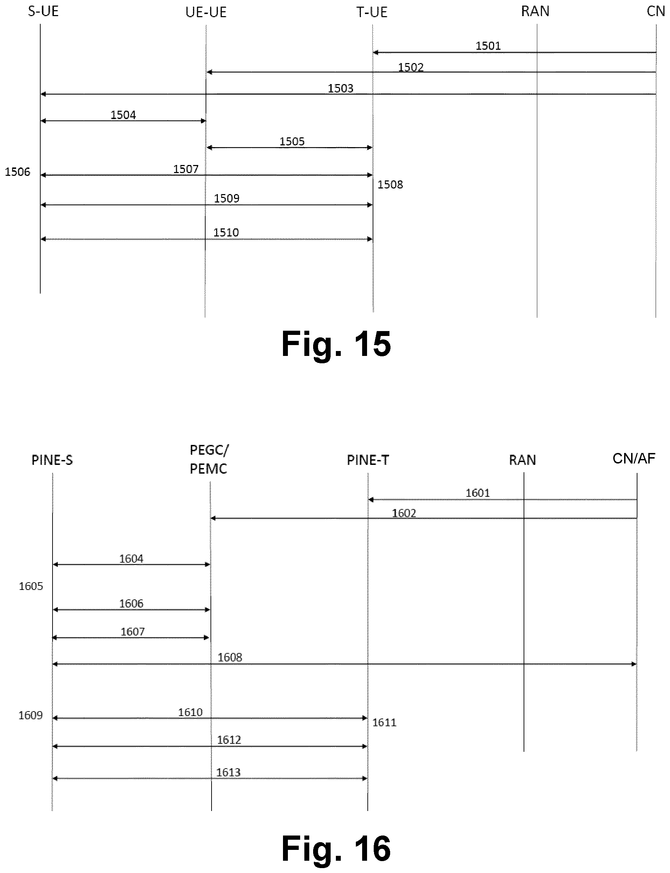

Fig. 15 schematically shows a signaling and processing diagram for UE-to-UE relay scenarios according to an embodiment. In Fig. 15, a source UE (S-UE) and a target UE (T-UE) may want to establish a secure communication over a UE-to-UE UE relay (UE-UE) making use of the PC5 interface. For instance, the source UE may be a smart health sensor, the target UE may be a smart watch, and the UE-to-UE relay may be a mobile phone. The three UEs may be connected to a core network (CN) over a radio access network (RAN). The devices may also be out-of-coverage at some point of time. To this end, the UEs may be initially configured in steps 1501, 1502, 1503. These configuration steps may involve a request by each of the UEs towards the CN requiring authorization to make use of UE-to-UE relay services. This request may be initiated upon primary authentication of each of the UEs. The authorized UEs may be provided in steps 1501, 1502 and 1503 with respective security keying materials for a subsequent discovery phase and/or security keying material or authorization information to setup a secure communication channel. In steps 1504 and 1505, the source UE and the UE-to-UE relay as well as the target UE and the UE-to-UE relay may perform a discovery process, e.g., as described in TS 33.503. For instance, the UE-to-UE relay may be an announcing UE and the target and source UEs may be monitoring UEs. The UEs may also perform a mode B discovery that involves two discovery messages. In steps 1506 and 1508, a password may be entered in the target and source UEs, e.g., in the case of a balanced PAKE. The password, or a value derived from it, may also be retrieved from the parameters configured in steps 1501 and 1503, e.g., in the case of an augmented PAKE. The source UE and the target UE may then establish a secure and authenticated channel. To this end, the source UE and target UE may run the protocol (procedure) of Fig. 3 or Fig. 14 over the UE-to-UE relay. In step 1507, the source and target UEs may exchange one or two messages that may correspond to the preamble messages described in above embodiments. These messages may include a session ID, a random value, an indication of PBKDF parameters, or any other parameters as described above. These messages may also include a relay service code or any identifier related to the type of communication service to be established. In step 1509, the source and target UEs may exchange PAKE messages to establish a secure authenticated channel. The source and target UEs may also optionally exchange additional messages for key confirmation. Finally, in step 1510, source and target UEs can securely communicate over the UE-to-UE relay.

It is to be noted that the preamble may be exchanged in the discovery phase for efficiency purposes.

It is to be noted that the discovery phase itself, with or without preamble, may also be based on a PAKE.

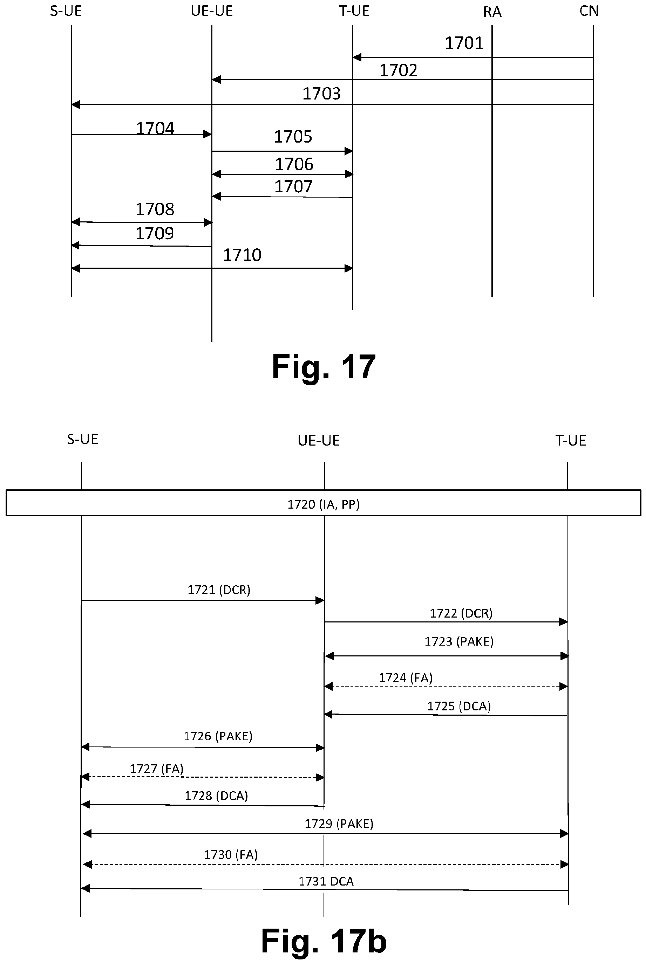

In an embodiment that can be combined with other embodiments, the security establishment between a source UE (S-UE)) or a target UE (T-UE)) and a UE-to-UE UE relay (UE-UE)), e.g., as in the procedure introduced in Fig. 15, may also be done as indicated in above SEP embodiments. For instance, the security establishment between T-UE and UE-UE / S-UE and UE-UE may be integrated/performed in/after Steps 1504 and 1505, e.g., as shown in Fig. 17.

Fig. 17 schematically shows a signaling and processing diagram for UE-to-UE relay scenarios according to an embodiment. In Fig. 17, steps 1701, 1702, 1703 refer to an initial authorization and parameter provisioning. Step 1704 can refer, for example, to an initial discovery message or an initial Direct Communication Request from S-UE to UE-UE. Step 1705 can refer, e.g., to an initial discovery message or an initial Direct Communication Request from UE-UE to T-UE. In step 1706 one or multiple steps or messages described in the embodiments may be performed. It is to be noted that step 1705 may include fields in Pre_AB as described in above embodiments. Step 1707 may be, for example, a Direct Communication Accept message. This step may include fields in the last message in the embodiments, e.g., a last confirmation message or the PAKE4 message. In step 1708 one or multiple steps or messages described in the embodiments may be performed. Step 1709 may be a direct communication accept and it may also include fields in the last message in embodiments, e.g. a last confirmation message. In step 1710 one or multiple steps or messages described in the embodiments may be performed.

In a related embodiment that can be combined with other embodiments, the password used in the previous embodiment and described in Fig. 17 may be configured during the initial authorization and parameter provisioning phase or generated by a device and exchanged with another device over an out-of-band (OOB) channel, or maybe be entered by a user.

In a related embodiment that can be combined with other embodiments, the SEP used in the previous embodiment and described in Fig. 17 may rely on a balanced or an augmented PAKE.

In a related embodiment that can be combined with other embodiments, upon the execution of the PAKE-based SEP that involved devices, e.g., S-UE or UE-UE or T-UE, may exchange an access token that may include an identifier, the identifier of the associated session, the user identifier, the identifier of groups of the user, privileges, access rights, etc. This information in the token may have been signed by the CN or an application in the CN and provided to a UE during the initial authorization and provisioning phase (e.g., steps 1701, 1702, 1703 in Fig. 17). This token should be stored in a secure location, e.g., SIM card in the UE, upon delivery to a UE. This token should be exchanged over a secure channel, e.g., once the SEP has been executed.

In a related embodiment that can be combined with other embodiments, upon the execution of the PAKE-based SEP that involved devices, e.g., S-UE or UE-UE or T-UE may receive an access token that may include an identifier, the identifier of the associated session, the user identifier, the identifier of groups of the user, privileges, access rights, etc. This information in the token may have been signed by the CN or an application in the CN and provided to a UE during the initial authorization and provisioning phase (e.g., steps 1701, 1702, 1703 in Fig. 17). This token could be received over a secure channel, e.g., once the SEP (such as a PAKE-based SEP) has been executed. The UE receiving the token may have been configured with a policy in the initial authorization and provisioning phase (e.g., steps 1701, 1702, 1703 in Fig. 17) that allows determining whether the UE sending the token is authorized to utilize the UE-UE service. Such a communication flow is illustrated in Fig. 17b, similar to Fig. 17, where DCR refers to a Direct Communication Request, DCA refers to a Direct Communication Accept and steps 1724, 1727 and 1730 (Further Authorization(FA)) are based on such an authentication token. In step 1720, initial authorization (IA) and parameter provisioning (PP) are performed.

In a related embodiment that maybe combined with other embodiments, the PAKE 1 message may be sent in the initial DCR message from S-UE towards UE-UE and then to T-UE. The PAKE2 message may then send back in the DCA message from T-UE towards UE-UE relay and then to S-UE. For instance, in steps 1721, 1722, 1725 and 1728 in Fig. 17b. A device or method according to this embodiment may use an implicit key confirmation in which PAKE3 and PAKE4 messages are not included. A device according to this embodiment may transmit messages with fields related to Pre_AB in the DCR message to indicate such things as the password to use, parameters for key derivation, etc.

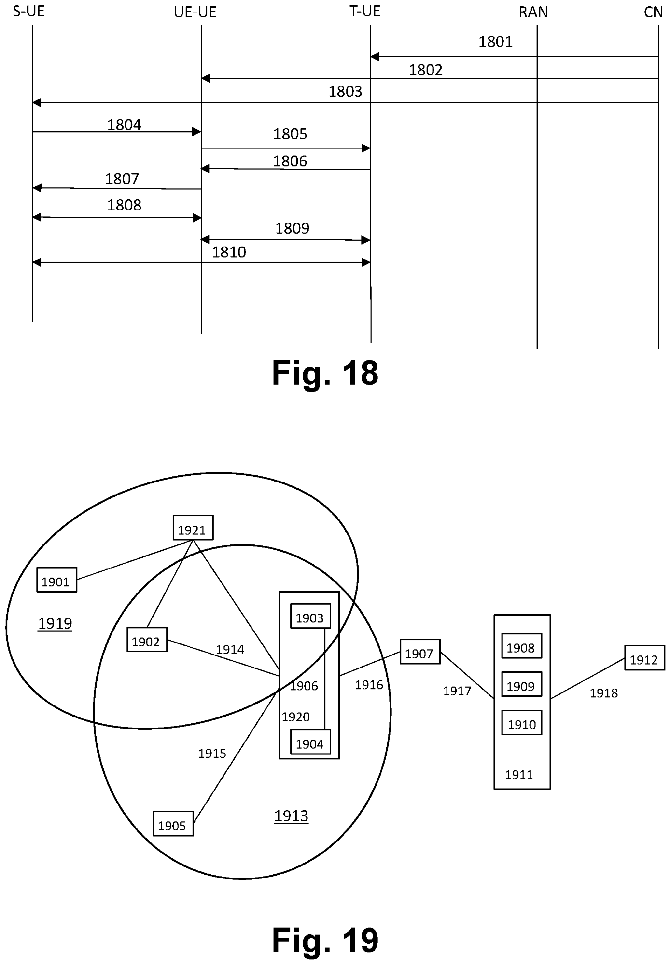

In a related embodiment illustrated by means of Fig. 18, steps 1801, 1802, 1803 refer to an initial authorization and parameter provisioning. Steps 1804 and 1805 refer to an initial discovery solicitation message. Steps 1806 and 1807 refer to a subsequent discovery response. Step 1808 refers to the establishment of a secure PC5 link between S-UE and UE2UE. Step 1809 refers to the establishment of a secure PC5 link between UE2UE and T-UE. Step 1810 refers to the establishment of a secure PC5 (L2) or communication (L3) link between S-UE and T-UE. The security aspects in steps 1808, 1809, and 1810 may be based on a PAKE-based SEP as described in the previous embodiment illustrated by means of Fig. 17 and optionally on a further authorization phase relying on authorization tokens.

In a related embodiment that can be combined with other embodiments, the access token contains data related to the password used in the SEP. This allows linking the PAKE-based SEP to the token exchanged at a later stage.

In a related embodiment that can be combined with other embodiments, if an augmented PAKE is used in the SEP, then the UE-UE relay may have been configured with password-based values (such as the verification value pair L and w0 in SPAKE2+) to ensure that it is difficult for a UE-UE relay to impersonate the S-UE or T-UE. Thus, step 1706 of Fig. 17 may involve a Pre_AB message or PAKE1 message first sent by T-UE towards the UE-UE device. Thus, step 1708 of Fig. 17 may involve a Pre_AB message first sent by the UE-UE device towards the S-UE and to which the S-UE replies with a Pre_BA and/or PAKE 1 message.

In a related embodiment that can be combined with other embodiments, if an augmented PAKE is used in the SEP, then the S-UE and T-UE may have been configured with password-based values (such as the verification value pair L and w0 in SPAKE2+) to ensure that it is difficult for these devices to impersonate the UE-UE relay. Thus, step 1706 of Fig. 17 may involve a Pre_AB message first sent by T-UE towards the UE-UE device and replied by a PAKE1 message from the UE-UE relay towards the T-UE device. Thus, step 1708 of Fig. 17 may involve a Pre_AB message or PAKE1 message first sent by the UE-UE device towards the S-UE.

In a related embodiment that can be combined with other embodiments, if an augmented PAKE is used in the SEP, then the T-UE may have been configured with password-based values (such as the verification value pair L and w0 in SPAKE2+) to ensure that it is difficult for the T-UE to impersonate the S-UE. Thus, step 1710 of Fig. 17 may involve a Pre_AB message or PAKE1 message first sent by S-UE towards the T-UE device.

In a related embodiment that can be combined with other embodiments, the balanced PAKE may be CPAKE and the augmented PAKE may be OPAQUE.

In a related embodiment that can be combined with other embodiments, the key confirmation messages in PAKE3 and PAKE4 may be done implicitly as in, e.g., CPAKE, removing the need for the exchange of PAKE3 and PAKE4.

In a related embodiment that can be combined with other embodiments, during the initial authorization and parameter provisioning phase, e.g., related to Fig. 18, the UE-to-UE relay or source UE or target UE may be configured with User Info ID, Relay Service Code(s), UE-to-UE Relay Layer indicator(s), Traffic type (IP or non-IP); the UE-to-UE Relay Layer Indicator indicates whether a particular RSC is offering 5G ProSe Layer-2 or Layer-3 UE-to-UE Relay service, default destination layer-2 IDs, security related parameters for discovery or the PAKE such as a password or a password-based value or further authorization process such as an authorization token or a policy or cryptographic key material to verify a token, validity time of the parameters.

In a related embodiment, provisioning of security parameters may be done by 5G Direct Discovery Name Management Function (DDNMF), Prose Key Management Function (PKMF), or the PCF.

In general, it is described a method and apparatus, which can be implemented in a device, for performing a second PAKE-based SEP between a first and a third device through the relay device. It is further described a method and apparatus related to the previous method and apparatus, for performing a first PAKE-based SEP between a first and a relay device, and if successful, authorizing the execution of the second PAKE based SEP.

Fig. 16 schematically shows a signaling and processing diagram for personal IoT network (PIN) scenarios according to an embodiment. In the scenario of Fig. 16, a PINE source device (PINE-S), a PEGC and/or PEMC, and a PINE target device (PINE-T) are involved. These devices may be part of a PIN. For instance, the PINE source device may be a virtual reality (VR) device (e.g., a headset) that simulates vision to end up with a 3D environment in which a user appears to be immersed while browsing through it or experiencing it, the target PINE device may be a smart TV, and the PEGC/PEMC may be a mobile phone (UE). The three devices may need connectivity/services from a core network (CN) over a radio access network (RAN). These three devices may further need means for secure communication between each other. To this end, the devices may be initially configured in steps 1601 and 1602 (as described above in connection with steps 1501 to 1503). The PINE source or target devices may not be directly configured by the CN because it may not be 3GPP RAN capable; instead, they may be configured by an application function (AF) through the CN or by the CN if the device is a 3GPP RAN capable device. The configuration may relate to security keying materials (e.g., PAKE-related, PC5 discovery keying materials as per TS 33.503) or other embodiments described herein, or communication parameters (such as QoS, required communication resources, and max. latency) .

In step 1604, the PINE source device and the PEGC and/or PEMC may setup an underlying communication channel, e.g., a WiFi channel. Then, the PINE source device may be triggered to enter a password, e.g., by means of a keyboard or by scanning a QR code (step 1605). This password may be generated by the PEGC and/or PEMC and it may be displayed on the screen. The password may also be derived by means of a KDF from a master secret on the PEGC and/or PEMC, e.g., the master secret of the UE used in primary authentication. The source PINE device and PEGC/PEMC are then able to exchange a preamble/PAKE messages in steps 1606 and 1607 as in the above embodiments resulting in a secure and authenticated channel. The PEGC/PEMC can then allow the source PINE device to make use of the 5GC communication resources in step 1608. This step may involve an authentication procedure with an AAA server, e.g., in the AF that would notify the PEGC/PEMC about the result.

In an additional variant, in step 1604, the PINE source device and the PEGC and/or PEMC may setup an underlying communication channel, e.g., a WiFi channel. Then, the PEGC/PEMC may be triggered to enter a password, e.g., by means of a keyboard or by scanning a QR code, e.g., attached to the PINE source device. This password may have been provided by the 5CN or a third party on the PINE. The source PINE device and PEGC/PEMC are then able to exchange a preamble/PAKE messages in steps 1606 and 1607 as in the above embodiments resulting in a secure and authenticated channel and resulting in initial access to the CN or an AF making use of the CN 1608. Additionally, and prior to this step 1608, upon successful establishment of a secure and authenticated channel in 1607, the PEGC/PEMC may securely receive further security information from the PINE source device, e.g., a digital certificate allowing the PEGC/PEMC to verify the identity of the PINE source device. This digital certificate may be verified by the PEGC/PEMC or be forwarded for verification by the CN or AF. In this first case, the PEGC/PEMC may give the PINE source device access to the CN or an AF making use of the CN. In this second case in which the CN or AF perform the verification, the CN or AF would send a confirmation message to the PEGC/PEMC to allow/disallow the traffic from the PINE source device. Access to this AF making use of the CN may happen through a network exposure function (NEF). It is to be noted that step 1608 may give access to the AF through some specific network resources, e.g., specific to the target AF. For instance, an object of the AF may be to create a personal IoT network in which all devices are reachable. Thus, a PINE source device that succeeds in steps 1606, 1607, and 1608 may be allocated connectivity resources (e.g., IP address, communication resources ensuring a certain reliability/latency) matching the needs of the AF). The resources allocated to a PINE upon successful authentication/authorization in step 1608 may depend on:

> a policy configured based on the user subscription in step 1602 and/or
> the communication requirements for the PINE that may be configured in the PEGC/PEMC in step 1608 and/or
> the amount of available resources taking into account other PINE devices connected to the PEGC/PEMC.

It is to be noted that the initial configuration in steps 1601 and 1602 may be done by an external AF through the CN or by the CN. This initial configuration may include the distribution of information related to the PAKE, e.g., in an augmented PAKE or information allowing the verification of a subsequent credential (e.g., a digital certificate) received from the PINE source device upon establishment of a secure channel (e.g., by means of a SEP or PAKE-based SEP). This initial configuration may also include communication policy for a PINE or communication policy for the PEGC.

In step 1609, a password may be entered/provided in the PINE source device and in step 1610 preamble messages as in Figs. 3 or 14 and above embodiments (equivalent to discovery messages) may be exchanged over the PEGC and/or PEMC towards another PINE target device. The PEGC/PEMC may only allow traffic originated from PINE that has been already authenticated/authorized in a previous step. In step 1611, the same password may be made available to this device. Based on the (preamble) messages in step 1610 and shared password, both source and target PINE devices can run a PAKE as in above embodiments in step 1612 resulting in a secure communication channel between the PINE devices in step 1613.

In Fig. 16, CN may include several network functions including, e.g., AMF, SMF, or UPF. The UPF may interact with a PIN related AF located in the CN or outside of the CN. Configuration parameters may be provided/configured, e.g., by the PCF, UDM, or UDR.

In an additional (sub-)embodiment, an AF, in or outside of the 5G system, may be in charge of managing the PIN. This AF and the PEGC/PEMC establish a secure channel via AKMA (TS 33.535). Once the PEGC/PEMC is authenticated based on the AKMA derived keys, the AF may provision the PEGC/PEMC with PIN configuration parameters (e.g., in step 1602). Before the AKMA NF is allowed to provide the AF with an AKMA-derived AF key, the AKMA NF check with the UDM/UDR, directly or indirectly through the AUSF, whether the user of the PEGC/PEMC is authorized to setup a PIN as well as, e.g., subscription data, subscription authentication, PDU session information, QoS requirements.

In an additional variant, a PINE device, e.g., PINE target as in Fig. 16, supports a cellular interface, and thus, it be feasible to configure said device over a cellular interface, e.g., Uu interface or the PC5 interface, e.g., in step 1601. The initial configuration includes configuration parameters to setup the PC5 interface, e.g., discovery security material as described in TS 33.503. This initial configuration also includes PIN configuration information. This information may be provided, e.g., by the AF once the PINE (e.g., PINE target) has established a secure connection with the 5G CN (e.g., upon primary authentication) by means of AKMA derived keys that may allow performing an authentication/authorization procedure between PINE and AF. This initial secure PIN configuration may be performed over the Uu or PC5 interfaces. This initial PIN configuration may be performed before the PINE device has tried to join a PIN. If the PIN configuration is successful, the PEGC/M are also instructed/configured to route communication between PINEs, e.g., steps 1610, 1612, and 1613 may need to be routed over the PEGC/PEMC where the communication link between PINE source and PEGC/PEMC may be based on a first communication protocol (e.g., WiFi) and the communication link between PINE target and PEGC/PEMC may be based on a second cellular communication protocol. This configuration may be pulled by the PEGC/PEMC or pushed by the PIN AF. Thus, the PEGC/PEMC may be configured by the 5GC with a configuration policy determining that certain PC5 traffic (e.g., at MAC or PDU session or IP layers) is to be routed towards a different networking interface, e.g., a WiFi or a BLE or an IEEE 802.15.4 networking interface.

In an additional variant, a PINE device, e.g., PINE target in Fig. 16, may support a cellular interface. Such a PINE device may use non-regulated spectrum, and thus, it may not always be required to rely on resource allocation from the RAN.

In an additional variant, a PINE device, e.g., PINE target in Fig. 16, may established a secure channel with the PEGC/PEMC by using, e.g., a PAKE-based SEP at application layer where the PAKE-based SEP messages may be transported, e.g., in a metadata field of PC5 discovery messages, or in other PC5 message.

In an additional variant, step 1608 may involve a(n) (mutual) authentication procedure between PINE and AF / 5GC.

In a related variant, the PIN AF may play the role or include functionalities of an AAA server.

In a related variant, the following may occur.

At stage 1, a UE that is a candidate to become the PEGC/PEMC of a PIN performs initial (primary) authentication with the core network, e.g., using a root key (e.g., K_AUSF in 5G) shared by the UE and authentication entity in the CN (e.g., AUSF in 5G);

At stage 2, if this initial (primary) authentication is successful, the UE may request communication with a certain PIN AF; or the CN (e.g., AUSF) may check the subscriber preferences, e.g., related to PIN management. In this case, the CN may authorize the UE, and UE and PIN AF may setup a secure communication, e.g., using a K_AF derived from K_AKMA as in TS 33.535;

At stage 3, the UE and PIN AF can then perform an authentication/authorization procedure based on K_AF or a key derived from it. Additionally, or alternatively, the procedure may also bed a different high-level application protocol using some credentials specific to the PIN;

At stage 4, if the authentication/authorization is successful in stage 3, then the AF may inform the CN (AUSF) of the UE status and may provide some configuration parameters related to, e.g., the PIN communication requirements, membership, etc that the UE has to use in its role of PEGC/PEMC. The CN (AUSF) may store this information in a data base, e.g., in the UDM (UDR). The CN (e.g., AUSF) may check this received configuration against the user subscription and verify whether it fulfils it. Billing information may also be updated due to the new status of the UE (active PEGC/PEMC).

At stage 5, the CN (e.g., AUSF through AMF) may inform (e.g., with a NAS message) the UE about its confirmed role as a PEGM or PEMC. The CN may also inform the UE about any specific PIN configuration information as shared by the PIN AF and verified against the user subscription. The CN may also configure the UE with a policy and configuration parameters to route PIN related data (e.g., data originated in a PINE) towards the AF using pre-defined networking resources. The CN may also configure the UE with a policy determining how/whether/what to route data to/from cellular PINE devices from/to non-cellular PINE devices within the PIN. Additionally, or alternatively, some of above information may also be sent by the AF.

At stage 6, the AF may also configure then the PEGM/PEMC with other configurations, e.g., related to PIN parameters.

Some of the stages 1 - 6 may be included, e.g., in step 1602 in Fig. 16. They resemble a security procedure by which a UE can become PEGC/PEMC of a PIN.

At stage 7, when the UE is requested to add a PINE to the PIN or a PINE requests access to the UE PIN, the UE may:

a) setup a secure channel between UE and PINE, e.g., using a PAKE-based SEP.

b) give access to the AF based on the configuration received in stage 5 or 6 or other parameters. This access may be limited in time waiting for confirmation from the CN or AF the successful authentication procedure between PINE and AF. This access may be based on specific communication resources that can be monitored by the CN to ensure PIN subscription compliancy.

Stage 7 may correspond to Steps 1604 - 1607 in Fig. 16.

At stage 8, An authentication and authorization procedure may be performed between PINE and AF. This procedure may be at application layer, e.g., outside of a 3GPP specification. Optionally or additionally or alternatively, the UE may derive a PINE key (K PINE) e.g., from K_AF by using a KDF with such a key an, e.g., an identifier provided/scanned by the PINE. The UE may securely share this identifier with the AF that can derive the same K_PINE since it shares K_AF.

At stage 9, if authentication/authorization between PINE and AF is successful in Step (8), AF informs CN (AUSF) of the new PINE, successful authentication status, and PINE requirements. AUSF adds information to UDM (UDR) about the PINE. Billing information may also be updated due to the new status of the PIN (new PINE). The CN may then inform the UE about the successful authentication of the PINE and any configuration information provided by the AF. The CN may also provide the PEGC/PEMC -- by means of a NAS message - with a communication policy to route data originated in the PINE using specific communication resources or a specific identifier. Additionally or alternatively, the AF may provide the UE with the previous information (e.g., using a secure channel protected with K_AF (or a key derived from it). The UE then informs the CN, e.g., by means of a NAS message towards the AMF and then to the AUSF.

At stage 10, UE may obtain or have obtained an identifier (scan QR code, enter ID,...) from the PINE for identification purposes. This identifier may also have been shared in a secure way with the AF, e.g., in Step 8. This identifier, or an identifier derived from it, e.g., by means of a KDF, may be shared with the CN for identification purposes of the PINE.

At stage 11, a PINE key (K_PINE) related to the UE may be derived, e.g.:

- from K_AUSF including identifier as input in KDF.
- from current K_AF, including identifier as input in KDF.
- provided by the AF

The AF may send PINE key to the PINE in a secure way (application layer) based on a secure link established, e.g., in Step (8) upon authentication/authorization. Additionally, or alternatively, the UE may share it. Additionally, or alternatively, CN and UE can also generate K_PINE if it is derived from K_AUSF or K_AF.

At stage 12, K_PINE may allow actions such as:

- the CN/UE to send certain commands to the PINE.

- the PINE to establish a secure channel with UE/CN

- the PINE to send certain messages in a secure way to CN.

Some of the stages 8 - 12 may be included in step 1608 in Fig. 16. They resemble an authentication and authorization process of a PINE.

Fig. 19 schematically provides a different view of the elements in a personal IoT network (PIN), similar to Fig. 16. The elements in Fig. 19 are as follows:

Device 1901 is a non-cellular device not part of the PIN.
Device 1902 is a non-cellular device part of the PIN.
Device 1903 is a cellular device capable of managing the PIN, i.e., PEMC.
Device 1904 is a cellular device capable of acting as a gateway of the PIN, i.e., PEGC.
Device 1905 is a cellular PINE device part of the PIN.
Device 1906 is a communication link between devices 1903 and 1904
Device 1907 is a cellular access device, e.g., gNB.
Device 1908 is the AMF in the CN.
Device 1909 is the AUSF in the CN.
Device 1910 is a NF in the CN such as UDM, UDR, AKMA, UPF, PCF, NEF, AF, etc. in the CN.
Element 1911 is the CN.
Element 1912 is an AF in charge of managing the PIN.
Network 1913 is the PIN including 1902, 1905 and 1920.
Link 1914 is a non-cellular communication link between 1920 and 1902.
Link 1915 is a cellular communication link (e.g., PC5) between 1905 and 1920.
Link 1916 is a cellular communication link (e.g., Uu) between 1920 and 1907.
Link 1917 is a communication link interfacing 1907 and 1911 or a network function in it.
Link 1918 is a communication link between 1911 and 1912.
Network 1919 is a non-cellular network.
Device 1920 is a device including the functionalities of 1905 and 1906.
Device 1921 is a non-cellular device managing or giving access to the non-cellular network.

In Fig. 19, it may be seen that device 1920 is part of 1919, - for example, it has joined that network and has credentials, such as a security key. Since device 1920 is part of network 1919, device 1920 can also communicate with device 1902 (part of network 1919) as well) over link 1914. Device 1902 has also joined network 1913 where device 1920 has managed the authentication/authorization procedure on behalf of elements 1911 or 1912 in order to access networks 1913 and links 1916 or 1915. When device 1902 needs to communicate with device 1905, or vice versa, communications are routed through device 1920 where device 1920 received from element 1911 or 1912 a policy determining which communication flows are allowed to be rerouted. In Fig. 19, device 1921 manages network 1919 and device 1920 is a part of network 1919. This implies that device 1920 also joins network 1919 first. Alternatively, device 1920 may include the functionalities of device 1921. In this case, device 1921 handles which devices join network 1919 first and then which of those devices join network 1913. When a new device is accepted in network 1913 by device 1920, device 1920 may inform other devices about the newly joined device.

In general, there is a method and apparatus, which can be implemented in a device, allowing one or more of the following actions:

- Receiving a configuration for a first device (e.g., PEGC/PEMC or cellular based PINE) from an AF executed on a third communication device;
- Performing a SEP (e.g., PAKE-based) between the first device and a second device (e.g., non-cellular PINE) allowing the initial establishment of a secure and authenticated channel with the second device through a first communication link, e.g., WiFi;
- Routing further authentication messages through a first device between the second device and the AF on the third communication device where the communication between the first device and third device goes through a second cellular backhaul communication link;
- Receiving an authorization confirmation at the first device from the third device determining the access rights of the second communication device to at least one of:

  ◦ accessing the first device network;
  ◦ accessing the second cellular backhaul communication link (e.g., Uu interface);
  ◦ communicating with a fourth device (e.g., cellular PINE) connected to the first device through a cellular communication link (e.g., sidelink/PC5).

In at least some of the above embodiments, the PAKE may be SPAKE2+ or a different PAKE, either balanced or augmented.

In at least some of the above embodiments, the password may be a shared symmetric key.

In at least some of the above embodiments, the password (PWD) may be a concatenation of (short) shared symmetric keys and metadata determining a validity of the password and communication link, e.g., how long it is valid and which access rights it involves. For instance:

$$PWD = K \mid \text{Metadata},$$

wherein the metadata may include an access policy or access roles. It is to be noted that this approach can be used with other PAKE schemes. In some cases, it may be required to apply a function on the input $K \mid$ Metadata, e.g., the PBKDF or a different function.

In some of the embodiments, the "metadata" value may be the root of a Merkle tree computed from a set of leaves where each leaf includes some information about the device. This allows the device to disclose only part of its data in its leaves. The device may only exchange the data once the secure connection is established.

This proposed technique has advantages compared with alternative techniques that can be used to grant authentication and authorized. For instance:

- if a conventional access token is used, initiator and responder may first establish a secure channel, e.g., using the Diffie-Hellman (DH) algorithm (which is a key-exchange protocol that enables two parties communicating over a public channel to establish a mutual secret without it being transmitted over the Internet). Then, the initiator may send an access token to the responder. The access token may contain information stating the access rights of the initiator and may be signed by an issuing party trusted by the responder. This scheme may require digital signatures, and it may still be prone to man-in-the-middle (MitM) attacks. In contrast, the proposed scheme is resistant to MitM attacks and does not require digital signatures.
- If initiator and responder rely on PWD = K | Metadata to perform symmetric-key mutual authentication and key agreement protocol. This may expose which passwords are assigned to which devices and therefore their identities. Furthermore, if the same password is assigned to a third device as initiator and responder, the third device can access the communication link between initiator and responder.

In some of the above embodiments, one of the messages in the preamble or PAKE may include a password hint indicating the receiving party which password or password-based information (e.g., referring to an augmented PAKE, e.g., in SPAKE2+ this password-based information refers to the verification value pair L and w0) to use. In this case, if a password has been configured, e.g., by a central authority such as the 5G CN, or if the user is not sure which password to use, or if the user is not sure which QR (containing the password) to scan, then the device may use the password hint to indicate it so that the other party knows which password to retrieve and use to authenticate the other party after executing the PAKE. Successful authentication may imply verification of the password and metadata. For instance, the password hint may be obtained as a function, e.g., a KDF or a hash, of the password and additional parameters such as a salt, a nonce, a counter, etc., as follows:

$$PWD\_Hint = KDF \ (PWD \mid additional \ parameters)$$

$$PWD\_Hint = Hash \ (PWD \mid additional \ parameters)$$

$$PWD\_Hint = HMAC \ (PWD \mid additional \ parameters),$$

or the password hint may be a bit string randomly generated and associated to the password.

In at least some of the above embodiments, the password may comprise at least two passwords. A first password provided by a central management entity to both communicating parties authorizing the establishment of the communication channel and a second password entered by the user enabling the user to authorize the setup of the secure communication channel.

$$PWD = PWD1 \mid PWD2$$

In some of the above embodiments, two PAKEs may be executed in parallel, a first password PWD1 used in a balanced PAKE where the password may be determined, e.g., by the users involved, and a second password PAWD2 used in an augmented PAKE where the password may be determined by the network/system management. Executing the PAKEs in parallel means that the PAKE messages may be sent simultaneously reducing the number of round trips. In similar PAKEs, steps or operations can be combined. This has the advantage that users can enter their own password to authorize the communication while the network/system can distribute in an initial configuration phase a password to the involved devices, e.g., to authorize the communication link, e.g., a first device (e.g., initiator) to communicate with a second device (the responder).

In at least some of the above embodiments, a central managing party, e.g., the 5GS, may support authorization of the UE as a UE-to-UE relay in the UE-to-UE relay scenario.

In at least some of the above embodiments, a central managing party, e.g., the 5GS may support authorization of the UE as a Source UE or a Target UE in the UE-to-UE relay scenario.

The fact that a PAKE may be augmented is a useful feature since if the responder or verifier is compromised, the best that an attacker can do to impersonate the initiator or client is to mount an offline attack. This allows the central managing party to deploy a password PWD as above, i.e., K | Metadata that can be used by the client to show its authenticity and authorization, e.g., to show it is authorized to act as a source UE towards the target UE. A central managing party may create, e.g., two types of passwords/keys: K_S and K_T. K_S may be provided to UEs that can act as source only, K_T may be provided to UEs that can act as target only. The counter part of those passwords/keys may be provided to the other party, e.g., a target device that can only act as target is provided with a function of a bitstring derived from K_S (and metadata) that is difficult to invert (in a security meaning). It is to be noted that if a balanced PAKE is used, then a central managing party may also be able to assign a password/key to a pair of devices authorizing them to communicate with each other.

In some of the above embodiments, one of the devices, e.g., the responder device, may also retrieve or request the password (or password-based value in an augmented PAKE) from such a central authority, e.g., upon reception of a preamble message containing a password hint. To this end, the device may need to share with the central authority certain parameters, e.g., a password hint or exchanged parameters to be used in the PBKDF. In the case of a password-based value in an augmented PAKE, this has the advantage that responder device may perform the subsequent key exchange, e.g., PAKE, with the initiator device on behalf of the central authority without having access to the password. Since the password-based value may depend on exchanged parameters to be used in the PBKDF, this value has limited validity. Only if the procedure is successful, the responder may allow the initiator to perform certain actions, e.g., have access to networking resources, the 5G core network, or an application function accessible through the 5G system.

In some of the above embodiments, an exchanged parameter to be used in a key derivation function may be (the least significant bits of) a UTC-based counter.

To summarize, methods and devices for setting up a secure communication channel with an improved key exchange for an SEP have been described.

While the invention has been illustrated and described in detail in the drawings and foregoing description, such illustration and description are to be considered illustrative or exemplary and not restrictive. It should be understood that embodiments may be combined and that features of any one of the embodiments may be used in combination with another embodiment. The invention is not limited to the disclosed embodiments. The proposed enhancements for SEPs (such as SPAKE2+ or SPAKE or PAKEs in general) can be implemented in all types of wired or wireless networks, e.g.,

it can be applied to devices or applications communicating using cellular wireless communication standards, specifically the 3rd Generation Partnership Project (3GPP) 5G and New Radio (NR) specifications. The communication devices or applications can be different types of devices, e.g., mobile phones, smart watches, smart tags for location tracking and logistics, commissioning devices, applications or tools, vehicles (for vehicle-to-vehicle (V2V) communication or more general vehicle-to-everything (V2X) communication), V2X devices, IoT hubs, IoT devices, including low-power medical sensors for health monitoring, medical (emergency) diagnosis and treatment devices, for hospital use or first-responder use, virtual reality (VR) headsets, etc., and may be used e.g. in personal IoT networks (PIN) and/or ProSe with focus on UE-to-UE.

Furthermore, the proposed enhancements for SPAKE2+, or PAKEs in general, or other SEPs can be used in applications such as Wi-Fi, cloud access, browser synchronization, e-passports, in the Thread network protocol for IoT devices, in PAKE standards developed by standard developing organizations (SDOs) such as IEEE, ISO/IEC, or IETF, in IEEE 802.11s protocols and WiFi protected access (e.g., WPA3 e.g. in connection with Simultaneous Authentication of Equals (SAE)), in protocols for transport layer security (e.g., TLS 1.3) or internet key exchange (e.g., IKEv2).

Although ProSe relay and sidelink communication have been mentioned, the present invention also applies to other types of relay devices, such as (smart) repeater devices, Integrated Access and Backhaul (IAB) nodes, or Wi-Fi Mesh APs.

Furthermore, the invention can be applied in medical applications or connected healthcare in which multiple wireless (e.g. 4G/5G) connected sensor or actuator nodes participate, in medical applications or connected healthcare in which a wireless (e.g. 4G/5G) connected equipment consumes or generates occasionally a continuous data stream of a certain average data rate, for example video, ultrasound, X-Ray, Computed Tomography (CT) imaging devices, real-time patient sensors, audio or voice or video streaming devices used by medical staff, in general IoT applications involving wireless, mobile or stationary, sensor or actuator nodes (e.g. smart city, logistics, farming, etc.), in emergency services and critical communication applications, in V2X systems, in systems for improved coverage for 5G cellular networks using high-frequency (e.g. mmWave) RF, and any other application areas of 5G communication where relaying is used.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B.

A single unit or device may fulfill the functions of several items recited in the claims. The mere fact that certain measures are recited in mutually different dependent claims does not indicate that a combination of these measures cannot be used to advantage.

The described operations like those indicated in Figs. 1 to 3 and 5 to 13 can be implemented as program code means of a computer program and/or as dedicated hardware of the commissioning device or luminaire device, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

**Claims**

1. An apparatus for controlling a security establishment process between a first communication device (A) and a second communication device (B) over a transmission link, wherein the apparatus is adapted to:

> receive from the second communication device (B), a second preamble message (Pre_BA);
> derive from information within the second preamble message (Pre_BA), a protocol transcript (TT);
> derive from the protocol transcript (TT), a first key (Ke) used to protect subsequent traffic; and
> generate using the first key (Ke), a third key (K_AB_i) and a fourth key (K_AB_c) used to respectively ensure integrity and confidentiality of messages transmitted from the first communication device (A) to the second communication device (B).

2. An apparatus for controlling a security establishment process between a first communication device (A) and a second communication device (B) over a transmission link, wherein the apparatus is adapted to:

> receive from the first communication device (A), a first preamble message (Pre_AB);
> derive from information within the first preamble message (Pre_AB), a protocol transcript (TT);
> derive from the protocol transcript (TT), a first key (Ke) used to protect subsequent traffic; and
> generate using the first key (Ke), a sixth key (K_BA_i) and a seventh key (K_BA_c) used to respectively ensure integrity and confidentiality of messages transmitted from the first communication device (B) to the second communication device (A).

3. The apparatus of claim 1, wherein the apparatus is further adapted to:
derive from the first key (Ke), a second key (K_AB) used to protect a communication from the first communication device (A) to the second communication device (B), the third key (K_AB_i) and the fourth key (K_AB_c) being derived from the second key (K_AB) by means of a key derivation function, KDF.

4. The apparatus of claim 2, wherein the apparatus is further adapted to derive from the first key (Ke), a fifth key (K_BA) used to protect a communication from the second communication device (B) to the first communication device (A), the sixth key (K_BA_i) and the seventh key (K_BA_c) being derived from the fifth key (K BA) by means of a key derivation function, KDF.

5. The apparatus of claim 1, wherein the third key (K_AB_i) and the fourth key (K_AB_c) are derived from the first key (Ke) by means of a key derivation function, KDF, execution.

6. The apparatus of claim 2, wherein the sixth key (K_BA_i) and the seventh key (K_BA_c) are derived from the first key (Ke) by means of a key derivation function, KDF, execution.

7. The apparatus of claim 2, wherein the information within the first preamble message (Pre_AB) comprises at least a session identifier (SID) and/or a first random value (R_A).

8. The apparatus of claim 1, wherein the information within the second preamble message (Pre_BA) comprises at least a session identifier (SID) and/or a second random value (R_B).

9. The apparatus of any one of claims 1 to 8, wherein the first key (Ke) is a shared symmetric secret.

10. The apparatus of any one of claims 1 to 9, wherein the first communication device (A) comprises a commissioning tool configured to use the security establishment process to interact with the second communication device (B) in order to perform at least one selected from the group of commissioning, configuring, authenticating and authorizing, or to perform a security setup process.

11. The apparatus of any one of claims 1 to 10, wherein the second communication device (B) is comprised in a medical device or a personal healthcare device or a smart home device.

12. A communication device (40) comprising an apparatus according to any one of claims 1 to 11.

13. A method of controlling a security establishment process between a first communication device (A) and a second communication device (B) over a transmission link, wherein the method comprises:

> receiving from the second communication device (B), a second preamble message (Pre_BA);
> deriving from information within the second preamble message (Pre_BA), a protocol transcript (TT);

deriving from the protocol transcript (TT), a first key (Ke) used to protect subsequent traffic; and
generating using the first key (Ke), a third key (K_AB_i) and a fourth key (K_AB_c) used to respectively ensure integrity and confidentiality of messages transmitted from the first communication device (A) to the second communication device (B).

14. A method of controlling a security establishment process between a first communication device (A) and a second communication device (B) over a transmission link, wherein the method comprises:

receiving from the first communication device (A), a first preamble message (Pre_AB);
deriving from information within the first preamble message (Pre_AB), a protocol transcript (TT);
deriving from the protocol transcript (TT), a first key (Ke) used to protect subsequent traffic; and
generating using the first key (Ke), a sixth key (K_BA_i) and a seventh key (K_BA_c) used to respectively ensure integrity and confidentiality of messages transmitted from the first communication device (B) to the second communication device (A).

15. A computer program product comprising code means for producing the steps of claim 13 or 14 when run on a computer device.

16. A system comprising two or more communication devices according to claim 12.

**If** ($kLen > (2^{32}-1) \times hLen$)

   **Return** *Err-i;* **Stop**

$len = \lceil kLen / hLen \rceil$ ;

$r = kLen - (len - 1) \times hLen$ ;

**For** $i$ = 1 to *len*

  $T_i = 0$;

  $U_0 = S \,\|\, \text{Int}(i)$;

  **For** $j$ = 1 to $C$

    $U_j = HMAC(P, U_{j-1})$

    $T_i = T_i \oplus U_j$

**Return**   $mk = T_1 \,\|\, T_2 \,\|\, \ldots \,\|\, T_{len}{<}0\ldots r{-}1{>}$

# Fig. 1

```
                         A                          B

                         |          (pre)           |
                         |<- - - - - - - - - - - - ->|
                         |                          |
                         |        (s-u prot)         |
       (cpt pA)          |            pA             |
                         |------------------------->|
                         |            pB             |           (cpt pB)
                         |<-------------------------|
                         |                          |
                         |         (der scr)         |           (cpt cB)
                         |            cB             |
                         |<-------------------------|
       (cpt cA)          |            cA             |
                         |------------------------->|
```

# Fig. 2

Fig. 3

**Fig. 4**

**Fig. 5**

**Fig. 6**

**Fig. 7**

**Fig. 8**

A                                                          B

902  Pre_AB (HF-SUPP1)

904  Pre_BA (HF-SUPP2)

# Fig. 9

A                                                          B

1002  Pre_AB (REL_A)

1004  Pre_BA (REL_B)

# Fig. 10

| 401 HLP |
| 402 LLP |

CONF        MSG

FRG-MSG

# Fig. 11

| 1120 |
|:---|
| Rx SID; R_A |

| 1130 | TT |
|:---|:---|

| 1140 | Ke |
|:---|:---|

| 1150 | K_AB; K_BA |
|:---|:---|

| 1160 | K_AB_i; K_AB_c |
|:---|:---|

# Fig. 12

| APP |
|:---:|

| PIN | |
|:---:|:---:|
| TRA & PHY | |

S-PEF                                                          NS-PEF

# Fig. 13

EP 4 322 462 A1

A              B

**PRE**

Pre_AB: ID_A, R_A

Pre_BA: ID_B, R_A', R_B, [PAKE_ID] [reli par]

903 R_A'=R_A?

Y

904 ID_B

905 PBKDF par

**PAKE**     SPAKE2+

901 cpt PBKDF par

902 cpt p_A, tx PAKE1

PAKE1: = p_A (in SPAKE2+)

906 cpt/tx p_B

907 cpt/tx c_B

R_B'+ PAKE2 = p_B (in SPAKE2+)

908 R_B'=R_B?   Y

PAKE 3 = c_B (in SPAKE2+)

909 ID_A

910 der scr, ver c_B

PAKE4 = c_A (in SPAKE2+)

911 der/tx conf c_A

912 der scr

913 ver conf in PAKE 4

FM

**Fig. 14**

S-UE | UE-UE | T-UE | RAN | CN

1501
1502
1503
1504
1505
1506 | 1507
1508
1509
1510

# Fig. 15

PINE-S | PEGC/PEMC | PINE-T | RAN | CN/AF

1601
1602
1604
1605
1606
1607
1608
1609 | 1610
1611
1612
1613

# Fig. 16

S-UE          UE-UE          T-UE          RA          CN

1701

1702

1703

1704

1705

1706

1707

1708

1709

1710

## Fig. 17

S-UE                    UE-UE                    T-UE

1720 (IA, PP)

1721 (DCR)

1722 (DCR)

1723 (PAKE)

1724 (FA)

1725 (DCA)

1726 (PAKE)

1727 (FA)

1728 (DCA)

1729 (PAKE)

1730 (FA)

1731 DCA

## Fig. 17b

Fig. 18

Fig. 19

Europäisches
Patentamt

European
Patent Office

Office européen
des brevets

# EUROPEAN SEARCH REPORT

Application Number

EP 22 19 0185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PETER SCHWABE ET AL: "Post-quantum TLS without handshake signatures", IACR, INTERNATIONAL ASSOCIATION FOR CRYPTOLOGIC RESEARCH , vol. 20220315:090704 15 March 2022 (2022-03-15), pages 1-26, XP061070780, Retrieved from the Internet: URL:https://eprint.iacr.org/2020/534.pdf [retrieved on 2022-03-15] | 1,2,7-16 | INV. H04L9/08 H04L9/32 H04L9/40 H04W12/00 G16Y30/10 H04L9/14 H04W12/041 |
| Y | * paragraph [0002] – paragraph [0003] * * figure 4 * ----- | 3-6 | |
| Y | TURAN M S ET AL: "Recommendation for password-based key derivation : part 1: storage applications NIST SP 800-132", NIST, NATIONAL INSTITUTE OF STANDARDS AND TECHNOLOGY (NIST) , 31 December 2010 (2010-12-31), pages 1-18, XP061057701, DOI: 10.6028/NIST.SP.800-132 Retrieved from the Internet: URL:https://nvlpubs.nist.gov/nistpubs/Legacy/SP/nistspecialpublication800-132.pdf [retrieved on 2010-12-31] * paragraph [0005] * ----- | 3-6 | |

|  |  | TECHNICAL FIELDS SEARCHED (IPC) |
|---|---|---|
|  |  | H04L G16Y H04W |

-/--

The present search report has been drawn up for all claims

| Place of search | Date of completion of the search | Examiner |
|---|---|---|
| Munich | 19 January 2023 | Bec, Thierry |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&: member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 22 19 0185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BOURDREZ H KRAWCZYK ALGORAND FOUNDATION K LEWI NOVI RESEARCH C A WOOD CLOUDFLARE D ET AL: "The OPAQUE Asymmetric PAKE Protocol draft-irtf-cfrg-opaque-09; draft-irtf-cfrg-opaque-09.txt", THE OPAQUE ASYMMETRIC PAKE PROTOCOL DRAFT-IRTF-CFRG-OPAQUE-09; DRAFT-IRTF-CFRG-OPAQUE-09.TXT; INTERNET-DRAFT: NETWORK WORKING GROUP, INTERNET ENGINEERING TASK FORCE, IETF; STANDARDWORKINGDRAFT, INTERN , no. 9 6 July 2022 (2022-07-06), pages 1-70, XP015152645, Retrieved from the Internet: URL:https://tools.ietf.org/html/draft-irtf -cfrg-opaque-09 [retrieved on 2022-07-06] * paragraphs [0004], [0006], [0010] * ----- | 1-16 | |
| A | WO 2017/041669 A1 (DING JINTAI [CN]) 16 March 2017 (2017-03-16) * paragraph [01.1] - paragraph [01.2] * * figure 2 * ----- -/-- | 1-16 | TECHNICAL FIELDS SEARCHED (IPC) |

The present search report has been drawn up for all claims

| Place of search | Date of completion of the search | Examiner |
|---|---|---|
| Munich | 19 January 2023 | Bec, Thierry |

EPO FORM 1503 03.82 (P04C01)

Europäisches
Patentamt

European
Patent Office

Office européen
des brevets

## EUROPEAN SEARCH REPORT

Application Number

EP 22 19 0185

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XINWEI GAO ET AL: "Efficient Implementation of Password-Based Authenticated Key Exchange from RLWE and Post-Quantum TLS", IACR, INTERNATIONAL ASSOCIATION FOR CRYPTOLOGIC RESEARCH , vol. 20171218:192844 14 December 2017 (2017-12-14), pages 1-8, XP061023959, Retrieved from the Internet: URL:http://eprint.iacr.org/2017/1192.pdf [retrieved on 2017-12-14] * paragraph [0002] - paragraph [0004] * ----- | 1-16 | |
| A | STEBILA UNIVERSITY OF WATERLOO S GUERON U HAIFA D ET AL: "Design issues for hybrid key exchange in TLS 1.3; draft-stebila-tls-hybrid-design-00.txt", DESIGN ISSUES FOR HYBRID KEY EXCHANGE IN TLS 1.3; DRAFT-STEBILA-TLS-HYBRID-DESIGN-00.TXT; INTERNET-DRAFT: NETWORK WORKING GROUP, INTERNET ENGINEERING TASK FORCE, IETF; STANDARDWORKINGDRAFT, INTERNET S , 11 March 2019 (2019-03-11), pages 1-22, XP015131953, Retrieved from the Internet: URL:https://tools.ietf.org/html/draft-steb ila-tls-hybrid-design-00 [retrieved on 2019-03-11] * paragraph [0003] * ----- -/-- | 1-16 | TECHNICAL FIELDS SEARCHED (IPC) |

The present search report has been drawn up for all claims

| Place of search | Date of completion of the search | Examiner |
|---|---|---|
| Munich | 19 January 2023 | Bec, Thierry |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................
& : member of the same patent family, corresponding
document

EPO FORM 1503 03.82 (P04C01)

Europäisches
Patentamt

European
Patent Office

Office européen
des brevets

## EUROPEAN SEARCH REPORT

**Application Number**

EP 22 19 0185

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DONGQING XU ET AL: "Provably Secure Three-party Password Authenticated Key Exchange Protocol Based On Ring Learning With Error", IACR, INTERNATIONAL ASSOCIATION FOR CRYPTOLOGIC RESEARCH, vol. 20170426:173311, 21 April 2017 (2017-04-21), pages 1-25, XP061023122, * paragraph [0004] * | 1-16 | |
| T | TJHAI M TOMLINSON POST-QUANTUM G BARTLETT QUANTUM SECRET S FLUHRER CISCO SYSTEMS D VAN GEEST ISARA CORPORATION O GARCIA-MORCHON PH: "Multiple Key Exchanges in IKEv2 draft-ietf-ipsecme-ikev2-multiple-ke-06; draft-ietf-ipsecme-ikev2-multiple-ke-06.txt", MULTIPLE KEY EXCHANGES IN IKEV2 DRAFT-IETF-IPSECME-IKEV2-MULTIPLE-KE-06; DRAFT-IETF-IPSECME-IKEV2-MULTIPLE-KE-06.TXT; INTERNET-DRAFT: INTERNET ENGINEERING TASK FORCE (IETF), INTERNET ENGINEERING TASK , no. 6 13 June 2022 (2022-06-13), pages 1-33, XP015152259, Retrieved from the Internet: URL:https://tools.ietf.org/html/draft-ietf-ipsecme-ikev2-multiple-ke-06 [retrieved on 2022-06-13] * paragraph [0003] * | | TECHNICAL FIELDS SEARCHED (IPC) |

The present search report has been drawn up for all claims

| Place of search | Date of completion of the search | Examiner |
|---|---|---|
| Munich | 19 January 2023 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

1

page 4 of 4

## ANNEX TO THE EUROPEAN SEARCH REPORT
## ON EUROPEAN PATENT APPLICATION NO.

EP 22 19 0185

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2023

| Patent document cited in search report | | Publication date | Patent family member(s) | | Publication date |
|---|---|---|---|---|---|
| WO 2017041669 | A1 | 16-03-2017 | US | 2018302218 A1 | 18-10-2018 |
| | | | WO | 2017041669 A1 | 16-03-2017 |

For more details about this annex : see Official Journal of the European Patent Office, No. 12/82

# EP 4 322 462 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **TAUBERT, T. et al.** SPAKE2+, an Augmented PAKE (Draft). *IETF,* 05 May 2022
- **W. LADD et al.** SPAKE2, a PAKE (Draft). *IETF,* 02 June 2021
- **MELTEM SÖNMEZ TURAN et al.** Recommendation for Password-Based Key Derivation, Part 1: Storage Applications. *NIST Special Publication,* December 2010, 800-132
- **OLEG TARASKIN et al.** *Towards Isogeny-Based Password-Authenticated Key Establishment*
- **XINWEI GAO et al.** *Efficient Implementation of Password-Based Authenticated Key Exchange from RLWE and Post-Quantum TLS*